# EUROPEAN PATENT SPECIFICATION

(11) **EP 3 696 641 B1**
(45) Date of publication and mention of the grant of the patent: **06.04.2022**
(21) Application number: 20156454.9
(22) Date of filing: 10.02.2020
(51) Int. Cl.: G05D 1/02, A47L 9/04, A47L 17/00, A47L 1/00, A47L 11/40

(54) **ROBOT CLEANER AND METHOD OF CONTROLLING THE SAME**
REINIGUNGSROBOTER UND VERFAHREN ZUR STEUERUNG DAVON
ROBOT NETTOYEUR ET SON PROCÉDÉ DE COMMANDE

(30) Priority: 13.02.2019 KR 20190016539
(43) Date of publication of application: 19.08.2020
(73) Proprietor: Samsung Electronics Co., Ltd., Gyeonggi-do 16677 (KR)
(72) Inventor: SO, Jeayun, 16677 Gyeonggi-do (KR); HONG, Junu, 16677 Gyeonggi-do (KR); KIM, Injoo, 16677 Gyeonggi-do (KR); LEE, Hakbong, 16677 Gyeonggi-do (KR)
(74) Representative: Walaski, Jan Filip

(56) References cited:
- US-A1- 2004 210 343
- US-A1- 2005 237 189
- US-A1- 2016 320 777
- US-A1- 2018 103 812

## Description

The disclosure relates to a robot cleaner and a method of controlling the same. More particularly, the disclosure relates to a robot cleaner including an optical flow sensor and a method of controlling the same.

A robot cleaner is an appliance that cleans a space to be cleaned while autonomously moving on the space to be cleaned without a user's manipulation.

In order to autonomously travel on the cleaning zone, the robot cleaner detects obstacles that hinder movement of the robot cleaner and stores travelling records (position information, direction information, etc.) during travel. For example, the robot cleaner may generate travelling records on the basis of an output of an encoder that detects wheel rotations, an output of a gyro sensor that detects rotation, and an output of an acceleration sensor that detects acceleration.

However, when a slip between the wheel and the floor occurs, the travelling record by the encoder may be inaccurate. In addition, the gyro sensor does not detect a linear motion of the robot cleaner, and the acceleration sensor does not detect a uniform motion of the robot cleaner.

As such, the travelling record based on the encoder, the gyro sensor, and the like may have a low accuracy depending on the material of the floor or the travelling situation.

The above information is presented as background information only to assist with an understanding of the disclosure. No determination has been made, and no assertion is made, as to whether any of the above might be applicable as prior art with regard to the disclosure.

US 2005/0237189 discloses a cleaner.

US 2018/0103812 discloses a robot cleaner.

US 2004/0210343 discloses a mobile robot.

US 2016/320777 discloses a robot cleaner provided with sensors for collision avoidance.

According to an aspect of the invention, there is provided a robot cleaner as set out in claim 1. According to another aspect of the invention, there is provided a method of controlling a robot cleaner as set out in claim 10. Aspects of the disclosure are to address at least the above-mentioned problems and/or disadvantages and to provide at least the advantages described below. Accordingly, an aspect of the disclosure is to provide a robot cleaner capable of generating accurate travelling records regardless of material of a floor.

Another aspect of the disclosure is to provide a robot cleaner capable of generating accurate travelling records regardless of the travelling situation.

Additional aspects will be set forth in part in the description which follows and, in part, will be apparent from the description, or may be learned by practice of the presented embodiments.

In accordance with an aspect of the disclosure, a robot cleaner that may distinguish a case in which a rear end of the robot cleaner is lifted from a case in which a wheel of the robot cleaner is fallen between steps while reversing is provided.

Other aspects, advantages, and salient features of the disclosure will become apparent to those skilled in the art from the following detailed description, which, taken in conjunction with the annexed drawings, discloses various embodiments of the disclosure.

### BRIEF DESCRIPTION OF THE DRAWINGS

The above and other aspects, features, and advantages of certain embodiments of the disclosure will be more apparent from the following description taken in conjunction with the accompanying drawings in which:
FIGS. 1 and 2 are views illustrating an external appearance of a robot cleaner according to various embodiments of the disclosure;
FIG. 3 is a view illustrating a configuration of a robot cleaner according to an embodiment of the disclosure;
FIG. 4 is a view illustrating an interior of a robot cleaner according to an embodiment of the disclosure;
FIGS. 5 and 6 are views illustrating a first optical sensor included in a robot cleaner according to various embodiments of the disclosure;
FIG. 7 is a view illustrating a second optical sensor included in a robot cleaner according to an embodiment of the disclosure;
FIGS. 8 and 9 are views illustrating a tool included in a robot cleaner according to various embodiments of the disclosure;
FIG. 10 is a view illustrating an example in which a robot cleaner travels according to an embodiment of the disclosure;
FIG. 11 is a view illustrating an example in which a robot cleaner travels toward an obstacle according to an embodiment of the disclosure;
FIG. 12 is a view illustrating an example in which a robot cleaner collides with an obstacle according to an embodiment of the disclosure;
FIG. 13 is a view illustrating an example in which a robot cleaner according to an embodiment cleans a surrounding area of an obstacle according to an embodiment of the disclosure;
FIG. 14 is a view illustrating another example in which a robot cleaner collides with an obstacle according to an embodiment of the disclosure;
FIG. 15 is a view illustrating another example in which a robot cleaner travels toward an obstacle according to an embodiment of the disclosure;
FIGS. 16 and 17 are views illustrating an example of an output of a second optical sensor included in a robot cleaner according to various embodiments of the disclosure;
FIG. 18 is a view illustrating an example in which a travelling error of a robot cleaner is detected according to an embodiment of the disclosure;
FIG. 19 is a view illustrating an example in which a robot cleaner travels according to an embodiment of the disclosure;
FIG. 20 is a view illustrating an example of an output of a second optical sensor included in a robot cleaner according to an embodiment of the disclosure;
FIG. 21 is a view illustrating an example in which an operation error of a robot cleaner is detected according to an embodiment of the disclosure;
FIG. 22 is a view illustrating an example of an output of a second optical sensor included in a robot cleaner according to an embodiment of the disclosure;
FIG. 23 is a view illustrating an example in which a second optical sensor included in a robot cleaner is inactivated according to an embodiment of the disclosure; and
FIG. 24 is a view illustrating an example in which an operation error of a second optical sensor included in a robot cleaner is detected according to an embodiment of the disclosure.
Throughout the drawings, like reference numerals will be understood to refer to like parts, components, and structures.

### DETAILED DESCRIPTION

Reference will now be made in detail to the embodiments of the disclosure, examples of which are illustrated in the accompanying drawings, wherein like reference numerals refer to like elements throughout.

Hereinafter, the operating principles and embodiments of the disclosure will be described with reference to the accompanying drawings.

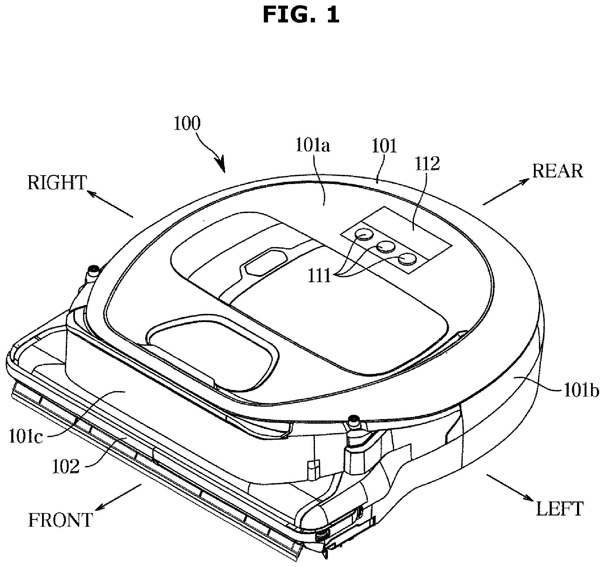

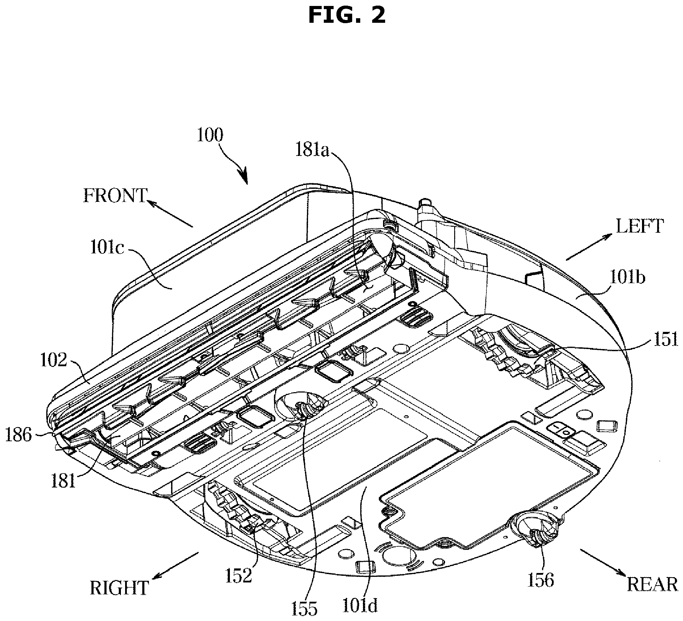

FIGS. 1 and 2 are views illustrating the external appearance of a robot cleaner according to various embodiments of the disclosure.

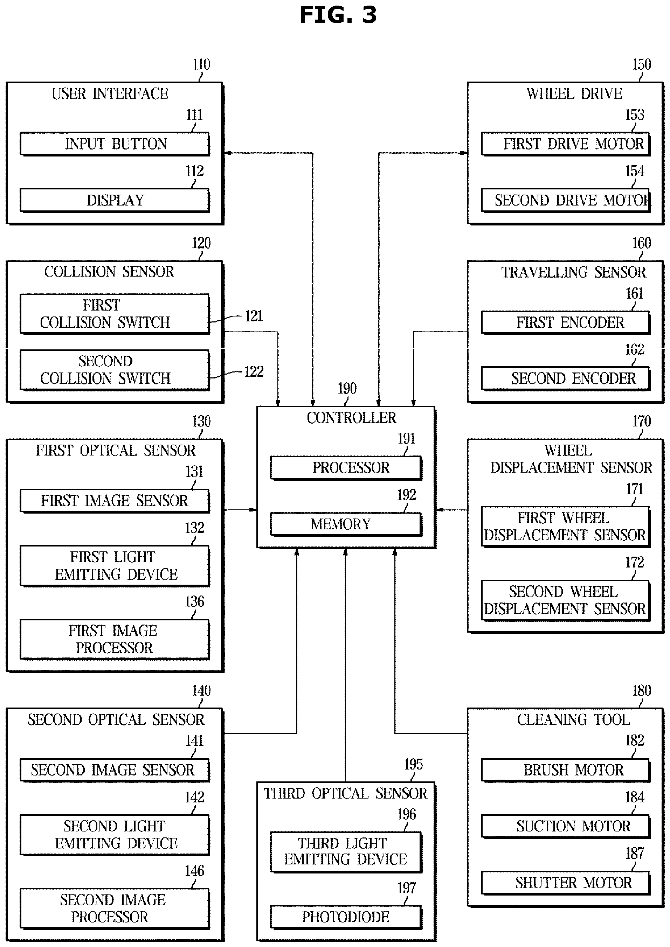

FIG. 3 is a view illustrating a configuration of a robot cleaner according to an embodiment of the disclosure.

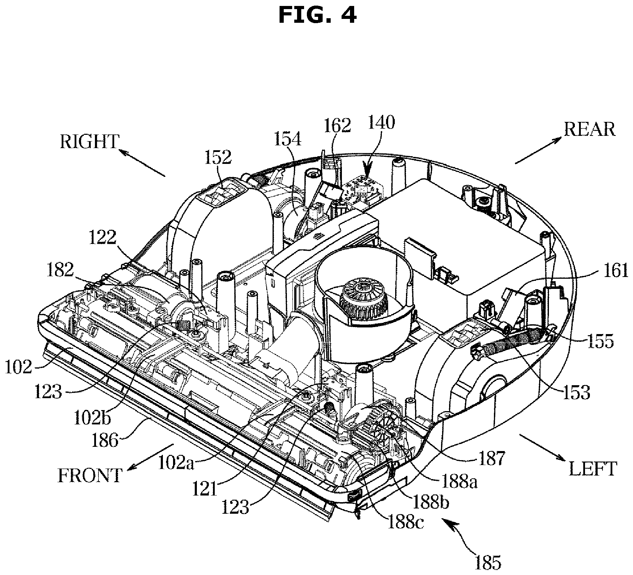

FIG. 4 is a view illustrating an interior of a robot cleaner according to an embodiment of the disclosure.

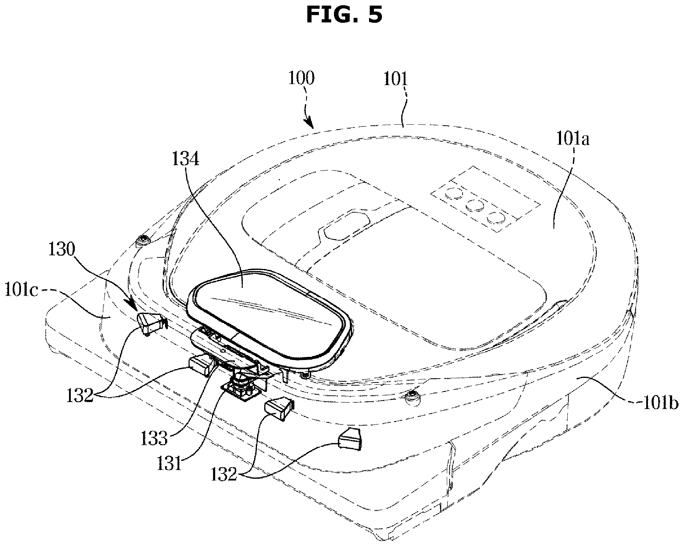

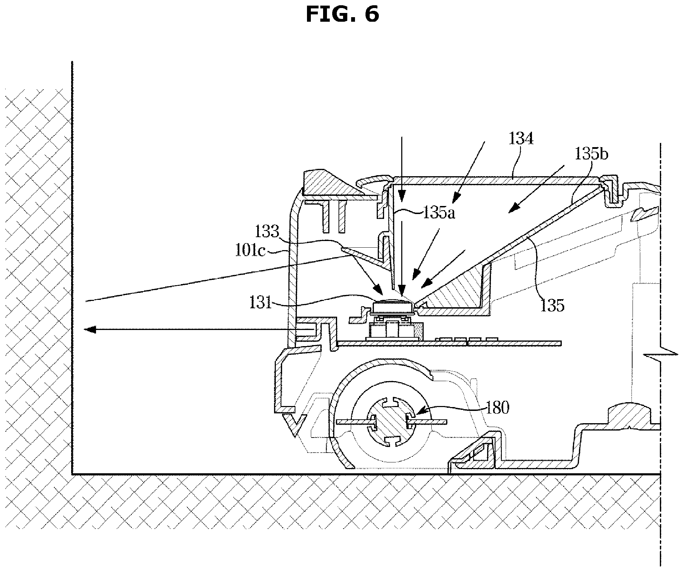

FIGS. 5 and 6 are views illustrating a first optical sensor included in a robot cleaner according to various embodiments of the disclosure.

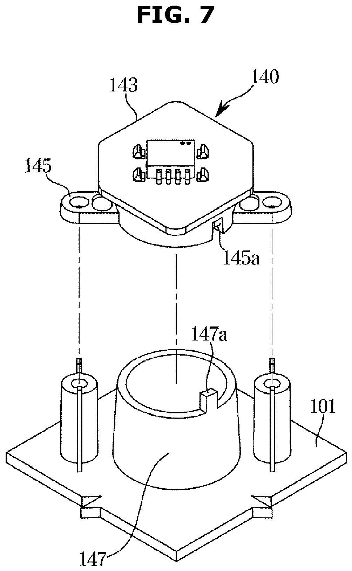

FIG. 7 is a view illustrating a second optical sensor included in a robot cleaner according to an embodiment of the disclosure.

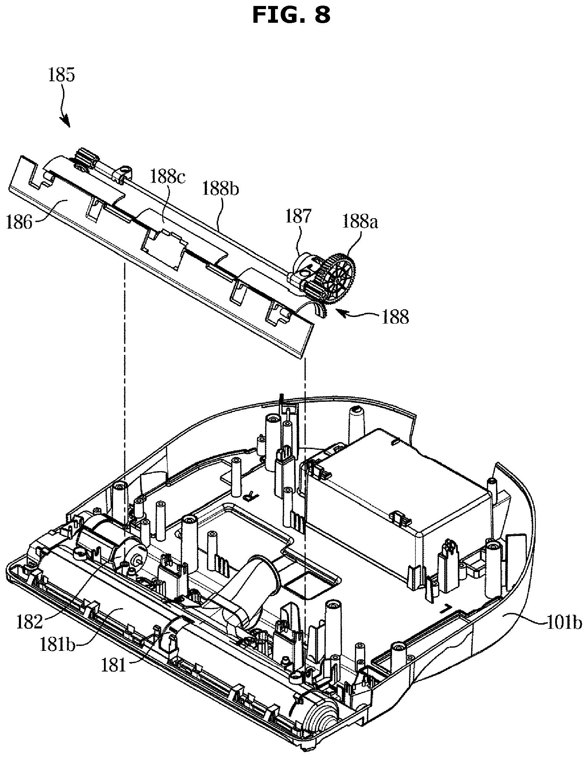

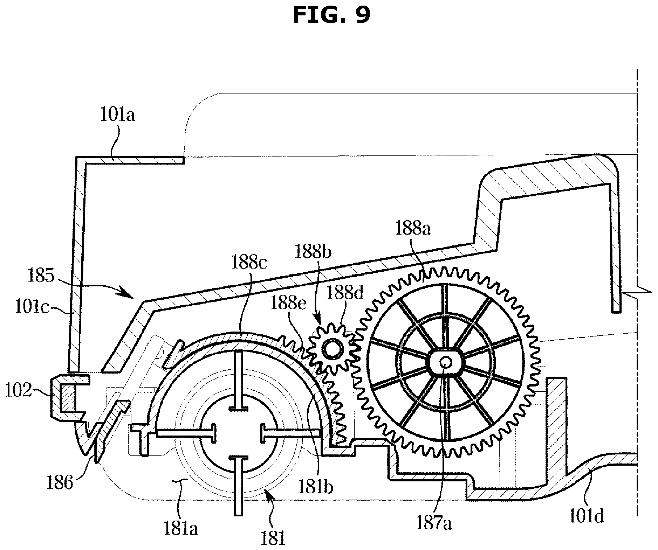

FIGS. 8 and 9 are views illustrating a tool included in a robot cleaner according to various embodiments of the disclosure.

A robot cleaner 100 may move on a cleaning zone to be cleaned, and clean the floor of the cleaning zone. The cleaning zone is not limited and may include any space to be cleaned by the robot cleaner 100 on the move. For example, the cleaning zone may include an outdoor space in addition to an indoor space, such as a room, a living room, a corridor, an office, or a gym in which the robot cleaner 100 is placed.

Referring to FIGS. 1, 2, 3, and 4, the robot cleaner 100 includes a main body 101 and a bumper 102 provided on a front portion of the main body 101.

The main body 101 may be provided in an approximately cylindrical shape. For example, the main body 101 may include an upper surface 101a having an approximately circular shape and a side surface 101b formed along a circumference of the upper surface 101a.

At least a part of the side surface 101b of the main body 101 may be formed flat. For example, a front surface 101c formed on the front portion of the main body 101 may be approximately flat when viewed from the front.

The bumper 102 may be formed on the front surface 101c of the main body 101 and approximately flat when viewed from the front. Since the main body 101 has an approximately cylindrical shape and the bumper 102 includes an approximately flat surface, the robot cleaner 100 includes a bottom surface 101d having a combination of a semicircular shape and a rectangular shape.

The bumper 102 may reduce the shock transmitted to the main body 101 in the event of collision with an obstacle. Here, the obstacle may include objects, humans, or animals that mat hinder traveling of the robot cleaner 100. The obstacles may include, for example, a wall that partitions the cleaning zone, furniture arranged in the cleaning zone, and humans or animals located in the cleaning zone.

The robot cleaner 100 may mainly travel such that the bumper 102 faces the front, and as shown in FIG. 1, a direction in which the bumper 102 faces may be defined as "front" of the robot cleaner 100.

At the inside and outside of the main body 101 of the robot cleaner 100, various components for implementing functions (travelling and cleaning) of the robot cleaner 100 may be provided.

The robot cleaner 100 includes a user interface 110, a collision sensor 120, a first optical sensor 130, a second optical sensor 140, a third optical sensor 195, a wheel drive 150, a travelling sensor 160, a wheel displacement sensor 170, a cleaning tool 180, and a controller 190.

The components included in the robot cleaner 100 are not limited to the above, and at least one component may be added or omitted as needed. In addition, names for referring to the components of the robot cleaner 100 are not limited thereto, and the component may be referred to using another name that may perform the same function.

The user interface 110 may be provided on the upper surface 101a of the main body 101 as shown in FIG. 1, and may include an input button 111 and a display 112.

The input button 111 may obtain a user input from the user. The user input of the input button 111 may include a user input for turning on or off the robot cleaner 100, a user input for operating or stopping the robot cleaner 100, a user input for selecting a cleaning mode of the robot cleaner 100, and a user input for returning the robot cleaner 100 to a charging station for charging.

The input button 111 may include a push switch and a membrane switch operated according to a pressing operation of a user or a touch switch operated according to a touch operation of a part of a user's body.

The display 112 displays operation information of the robot cleaner 100 in response to a user input inputted by the user through the input button 111. For example, the display 112 may display an operation state of the robot cleaner 100, a charging state of a battery, a cleaning mode selected by the user, a plan for returning to a charging device, and the like.

The display 112 may include a light emitting diode (LED) panel, an organic light emitting diode (OLED) panel, a liquid crystal display (LCD) panel, or the like.

The input button 111 and the display 112 may provide a touch screen panel (TSP) that is formed in a unitary assembly and is configured to acquire a user input from a user and display operation information corresponding to the user input. The TSP may include a display for displaying operation information and a user input, a touch panel for detecting a touch input, and a touch screen controller for determining a control command inputted by a user on the basis of the touch input.

The collision sensor 120 may be located at an approximately rear portion of the bumper 102 as shown in FIG. 4, and include a first collision switch 121 and a second collision switch 122.

The bumper 102 may be formed on the front surface 101c of the main body 101 as described above, and may reduce the impact transmitted to the main body 101 in the event of collision with an obstacle. The bumper 102 may transmit the impact caused by the collision to the first collision switch 121 and the second collision switch 122 when the collision with the obstacle occurs.

The first collision switch 121 and the second collision switch 122 may individually detect collisions of obstacles with the bumper 102.

The first collision switch 121 may be installed on the left of the main body 101 and may detect a collision with an obstacle on a left portion 102a of the bumper 102. Due to the collision with the obstacle on the left portion 102a of the bumper 102, the left portion 102a of the bumper 102 may be moved backward with respect to the main body 101, and the first collision switch 121 may detect the movement of the left portion 102a of the bumper 102. For example, the second collision switch 122 having been opened (OFF) maybe closed (ON) by the movement of the left portion 102a of the bumper 102.

The second collision switch 122 may be installed on the right of the main body 101 and detect a collision with an obstacle on a right portion 102b of the bumper 102. Due to the collision with the obstacle on the right portion 102b of the bumper 102, the right portion 102b of the bumper 102 maybe moved backward with respect to the main body 101, and the second collision switch 122 may detect the movement of the right portion 102b of the bumper 102. For example, the first collision switch 121 having been opened (OFF) may be closed (ON) by the movement of the right portion 102b of the bumper 102.

When the bumper 102 collides with an obstacle, the first collision switch 121 and the second collision switch 122 may each transmit a collision detection signal (e.g., a voltage or current) indicating the collision of the bumper 102 with the obstacle to the controller 190.

An elastic member 123 is provided to restore the bumper 102 that moved due to the collision with the obstacle to its original position. The elastic member 123 may connect the main body 101 to the bumper 102. When the bumper 102 is moved due to the collision with the obstacle, the elastic member 123, may restore the bumper 102 to its original position.

Referring to FIGS. 5 and 6, the first optical sensor 130 may be positioned at an approximately front portion of the main body 101 of the robot cleaner 100.

The first optical sensor 130 includes a first image sensor 131, a first light emitting device 132, a reflective member 133, a window 134, an optical guide 135, and a first image processor 136.

The first image sensor 131 may photograph surroundings of the robot cleaner 100 (e.g., the front side and/or the upper side of the robot cleaner) and acquire image data. The first image sensor 131 may include photo diodes for converting light (e.g., infrared rays or visible rays) into electrical image data. For example, the first image sensor 131 may include a photodiode array in which photodiodes are arranged in two dimensions. For example, the first image sensor 131 may include a complementary metal oxide semiconductor (CMOS) sensor or a charge coupled device (CCD) sensor.

The first image sensor 131 may face upward as shown in FIGS. 5 and 6. For example, the first image sensor 131 may receive light incident from an upper side of the first image sensor 131.

The first image sensor 131 may also further include a lens that focuses light into the photodiode array.

The first light emitting device 132 may transmit light (e.g., infrared rays) toward the front of the robot cleaner 100. For example, the first light emitting device 132 may include a light emitting diode (LED) for transmitting light. The light emitting diode may emit infrared rays or visible rays (hereinafter, referred to as 'infrared rays and the like'). However, the disclosure is not limited thereto, and the light emitting diode may emit ultraviolet rays.

The first light emitting device 132 may also further include a wide-angle lens for diffusing light emitted from a light emitting diode to be parallel with the floor. The wide-angle lens may be formed of a material allowing light to pass therethrough, and may diffuse light emitted from the light emitting diode to be parallel with the floor using refraction or total reflection. With the wide-angle lens, the light emitted from the light emitting diode may be diffused in a fan shape toward the front of the robot cleaner 100.

The reflective member 133 may be provided at an upper side of the first image sensor 131, and may reflect light incident from the front of the robot cleaner 100 toward the first image sensor 131.

The light transmitted by the first light emitting device 132 may propagate forward of the robot cleaner 100, and the light may be reflected by an obstacle located in front of the robot cleaner 100. Some of the reflected light may be incident onto the robot cleaner 100. The reflective member 133 may reflect the light reflected from the obstacle to the first image sensor 131.

Therefore, at least a part of the first image sensor 131 may acquire image data based on the light reflected from the obstacle.

In order that at least another part of the first image sensor 131 photographs the upper side of the robot cleaner 100, the window 134 and the optical guide 135 are provided on the upper side of the first image sensor 131.

The window 134 may be formed of a transparent material that allows light to pass therethrough while protecting the first image sensor 131 from foreign substances, such as dust. The window 134 may have an approximately trapezoidal shape in which one of approximately parallel sides is longer than the other side, or a semicircular shape.

The optical guide 135 is provided such that light passing through the window 134 is incident onto the first image sensor 131. The optical guide 135 may have a semi-conical shape having a wide cross-sectional area at the top and a narrow cross-sectional area at the bottom such that the optical guide 135 does not block the view of the first image sensor 131. For example, the optical guide 135 includes a first partition 135a extending in the vertical direction from the first image sensor 131 and a second partition 135b extending obliquely upward from the first image sensor 131.

As such, since the optical guide 135 has an approximately semi-conical shape, light incident from the upper side of the robot cleaner 100 may be incident to the first image sensor 131 without being disturbed. Therefore, the first image sensor 131 may acquire image data of the upper side of the robot cleaner 100.

As such, the first image sensor 131 may acquire the front image data of the robot cleaner 100 and the upper image data of the robot cleaner 100.

The first image processor 136 may receive the image data from the first image sensor 131 and process the image data of the first image sensor 131.

For example, the first image processor 136 may divide the front image data of the robot cleaner 100 from the upper image data of the robot cleaner 100 in the image data of the first image sensor 131.

The first image processor 136 identifies the existence of an obstacle located in front of the robot cleaner 100 from the front image data, and when the obstacle exists, identifies position information of the obstacle (the distance to the obstacle and the direction of the obstacle).

The first image processor 136 may extract a feature point (e.g., an edge portion of the photographed object) from the upper image data and store the extracted feature of the image data. The first image processor 136 may compare a feature point of current upper image data with a feature point of previous upper image data. The first image processor 136 may determine a motion vector of the feature point of the image data on the basis of the comparison between the position of the feature point of the current upper image data and the position of the feature point of the previous upper image data. In addition, the first image processor 136 may determine the moving direction of the robot cleaner 100 on the basis of the motion vector of the feature point of the image data.

As such, the first optical sensor 130 may provide the controller 190 with information about the presence/absence of the obstacle, the position of the obstacle, and the moving direction of the robot cleaner 100.

The second optical sensor 140 may be installed at one side of the main body 101 of the robot cleaner 100. For example, as shown in FIG. 7, the second optical sensor 140 may be provided at a rear lower portion of the robot cleaner 100, but the position of the second optical sensor 140 is not limited thereto. For example, the second optical sensor 140 may be installed at the central portion of the main body 101 of the robot cleaner 100.

The second optical sensor 140 includes a second image sensor 141, a second light emitting device 142, a printed circuit board 143, a sensor support member 145, and a second image processor 146.

The second image sensor 141 may photograph the surroundings (e.g., a floor of a cleaning zone) of the robot cleaner 100 and acquire image data. The second image sensor 141 may include a photo diode array, for example, a CMOS sensor or a CCD sensor.

The second image sensor 141 may face the floor of the cleaning zone as shown in FIG. 7. For example, the second image sensor 141 may receive light incident from the lower side of the second image sensor 141.

The second image sensor 141 may also further include a lens that focuses light into the photodiode array.

The second light emitting device 142 may transmit light (for example, infrared rays or visible rays) toward the lower side of the robot cleaner 100. For example, the second light emitting device 142 may include a light emitting diode that transmits light. The light emitting diode may emit infrared rays or visible rays. However, the disclosure is not limited thereto, and the light emitting diode may emit ultraviolet rays.

The second image sensor 141 and the second light emitting device 142 may be mounted on the printed circuit board 143. Circuits for connecting the second image sensor 141 and the second light emitting device 142 to the controller 190 may be mounted on the printed circuit board 143.

The printed circuit board 143 may be supported by the sensor support member 145.

The sensor support member 145 may be fixed to a tube 147 formed on the main body 101. The tube 147 may be integrally formed with the main body 101.

An assembly protrusion 147a is formed on an upper portion of the tube 147, and an assembly groove 145a is formed in a lower portion of the sensor support member 145. The assembly protrusion 147a of the tube 147 may be inserted into the assembly groove 145a of the sensor support member 145. The assembly protrusion 147a and the assembly groove 145a may guide the position and posture of the sensor support member 145 to be assembled. Due to the assembly protrusion 147a of the tube 147 and the assembly groove 145c of the sensor support member 145, assemblers may be prevented from assembling the sensor support member 145 with the tube 147 in a wrong direction.

The second light emitting device 142 of the second optical sensor 140 may transmit light from the inside of the tube 147 to the lower side. The light transmitted by the second light emitting device 142 may propagate toward the lower side of the tube 147, and light may be reflected by the floor of the cleaning zone. Some of the reflected light may be incident onto the second image sensor 141 in the tube 147.

The second image sensor 141 may receive the light reflected from the floor of the cleaning zone. In other words, the second image sensor 141 may photograph the floor of the cleaning zone and acquire the floor image data of the cleaning zone.

The second image processor 146 may receive the image data from the second image sensor 141 and process the image data of the second image sensor 141.

For example, the second image processor 146 may store currently acquired floor image data. The second image processor 146 may compare the currently acquired floor image data with previously stored floor image data. The second image processor 146 may determine a motion vector of the image data on the basis of a comparison between the current floor image data and the previous floor image data. In addition, the second image processor 146 may determine a motion vector of the robot cleaner 100 on the basis of the motion vector of the image data.

The second image processor 146 may output information about an occurrence of movement of the robot cleaner 100 and a motion vector of the robot cleaner 100. The motion vector of the robot cleaner 100 may include a moving distance and a moving direction of the robot cleaner 100. For example, the motion vector may include a moving distance in the x-axis direction and a moving distance in the y-axis direction.

As such, the second optical sensor 140 may provide the controller 190 with information about the occurrence of a movement of the robot cleaner 100, and the motion vector of the robot cleaner 100.

The third optical sensor 195 may be installed on the bottom surface 101d of the main body 101 of the robot cleaner 100. For example, the third optical sensor 195 may include a plurality of optical sensor modules, and the plurality of optical sensor modules may be installed on the bottom surface 101d of the main body 101 of the robot cleaner 100. Some of the plurality of optical sensor modules may be installed at the forefront of the bottom surface 101d of the main body 101, and some of the plurality of optical sensor modules may be installed on the front sides of the first drive wheel 151 and the second drive wheel 152.

The third optical sensor 195 includes a third light emitting device 196 and a photodiode 197.

The third light emitting device 196 may be installed on the bottom surface 101d of the main body 101 to transmit infrared or visible rays (infrared rays or the like) toward the lower side. When the robot cleaner 100 is placed on the floor, the third light emitting device 196 may emit infrared rays or the like toward the floor.

The photodiode 197 is provided on the bottom surface 101d of the main body 101 and may receive infrared rays or the like propagated from the lower side of the bottom surface 101d of the main body 10. In addition, the photodiode 197 may transmit a step detection signal (a current or voltage) that depends on the intensity of the received infrared rays or the like to the controller 190.

The controller 190 may receive the step detection signal from the photodiode 197, and may detect whether the robot cleaner 100 is spaced apart from the floor or a step exists on the floor on the basis of the step detection signal.

The wheel drive 150 may move the robot cleaner 100 in response to a control signal of the controller 190.

The wheel drive 150 includes a first drive wheel 151, a second drive wheel 152, a first drive motor 153, a second drive motor 154, a first caster wheel 155, and a second caster wheel 156.

Referring to FIG. 2, the first drive wheel 151 is provided at a left end of the bottom surface 101d of the robot cleaner 100, and the second drive wheel 152 is provided at a right end of the bottom surface 101d of the robot cleaner 100. As the first drive wheel 151 and the second drive wheel 152 rotate, the main body 101 of the robot cleaner 100 is moved forward or backward, or leftward or rightward.

The first drive motor 153 may rotate the first drive wheel 151, and the second drive motor 154 may rotate the second drive wheel 152. The first drive motor 153 and the second drive motor 154 may rotate the first drive wheel 151 and the second drive wheel 152 independent of each other by a control signal of the controller 190. The first drive wheel 151 may be rotated by the first drive motor 153 independent of the rotation of the second drive wheel 152, and the second drive wheel 152 may be rotated by the second drive motor 154 independent of the rotation of the first drive wheel 151.

The first caster wheel 155 and the second caster wheel 156 are installed at a front side and a rear side of the bottom surface 101d of the robot cleaner 100, respectively. The first caster wheel 155 and the second caster wheel 156 may support the main body 101 without disturbing the movement of the main body 101 of the robot cleaner 100.

By the rotation of the first drive wheel 151 and the second drive wheel 152, the robot cleaner 100 may perform various travel operations, such as forward travel, backward travel, rotation travel, and in-situ rotation. For example, when the first drive wheel 151 and the second drive wheel 152 rotate at the same speed in the same direction, the robot cleaner 100 may travel forward or backward. When the first drive wheel 151 and the second drive wheel 152 rotate at different speeds in the same direction, the robot cleaner 100 may turn left or turn right. Also, when the first drive wheel 151 and the second drive wheel 152 rotate at the same speed in different directions, the robot cleaner 100 may rotate in place in a clockwise direction or counterclockwise direction.

The wheel drive 150 may include a driving circuit for supplying driving current to the first drive motor 153 and the second drive motor 154 in response to a control signal of the controller 190, and a power transmission device for respectively transmitting rotations of the first and second motors 153 and 154 to the first and second drive wheels 151 and 152.

The travelling sensor 160 may be installed on the first drive wheel 151 and the second drive wheel 152, and may detect rotation speeds and rotation directions of the first and second drive wheels 151 and 152.

The travelling sensor 160 includes a first encoder 161 and a second encoder 162.

The first encoder 161 may detect the rotation speed and the rotation direction of the first drive wheel 151, and the second encoder 162 may detect the rotation speed and the rotation direction of the second drive wheel 152.

For example, each of the first encoder 161 and the second encoder 162 may include a disk in which a plurality of slits are formed, a light emitting diode that emits light, and a photo diode capable of sensing light passing through the plurality of slits. The first encoder 161 and the second encoder 162 may identify the rotation speed and the rotation direction of the first drive wheel 151 and the rotation speed and the rotation direction of the second drive wheel 152, respectively, on the basis of the period at which light is detected by the respective photo diodes and the number of times light is detected by the respective photodiode.

In addition, each of the first encoder 161 and the second encoder 162 may include a disk provided with a plurality of permanent magnets and a Hall sensor capable of detecting a magnetic field caused by the plurality of permanent magnets. The first encoder 161 and the second encoder 162 may identify the rotation speed and the rotation direction of the first drive wheel 151 and the rotation speed and the rotation direction of the second drive wheel 152, respectively, on the basis of the period at which the magnetic field is detected by the respective Hall sensors and the number of times the magnetic field is detected by the respective Hall sensors.

The first encoder 161 and the second encoder 162 respectively provide the controller 190 with information about the rotation speed and the rotation direction of the first drive wheel 151 and information about the rotation speed and the rotation direction of the second drive wheel 152.

The wheel displacement sensor 170 may detect that the first drive wheel 151 and the second drive wheel 152 are displaced from the original positions thereof.

The first drive wheel 151 and the second drive wheel 152 may each move between a first position and a second position. For example, when the main body 101 of the robot cleaner 100 is placed on the floor, the first drive wheel 151 and the second drive wheel 152 may be located at the respective first positions. When the main body 101 of robot cleaner 100 is spaced apart from the floor, the first drive wheel 151 and the second drive wheel 152 may be displaced from the respective first positions and thus may be placed in the respective second positions. The wheel displacement sensor 170 may detect that the first drive wheel 151 and the second drive wheel 152 are moved from the first positions to the second positions.

The wheel displacement sensor 170 may include a first wheel displacement sensor 171 for detecting displacement of the first drive wheel 151 from the original position (the first position) and a second wheel displacement sensor 172 for detecting displacement of the second drive wheel 152 from the original position (the first position).

When the first drive wheel 151 and the second drive wheel 152 are displaced from the respective original positions (the first positions), the first wheel displacement sensor 171 and the second wheel displacement sensor 172 may provide the controller 190 with wheel displacement signals (for example, a voltage or current) indicating displacement of the first drive wheel 151 and the second drive wheel 152.

The controller 190 may identify displacement of the first drive wheel 151 and the second drive wheel 152 in response to the wheel displacement signals of the first wheel displacement sensor 171 and the second wheel displacement sensor 172.

The cleaning tool 180 may clean the floor of the cleaning zone in response to a control signal of the controller 190.

The cleaning tool 180 includes a drum brush 181, a brush motor 182, a suction motor 184, and a shutter assembly 185.

Referring to FIGS. 8 and 9, the drum brush 181 is provided adjacent to an inlet 181a formed in the bottom surface 101d of the main body 101. The drum brush 181 may rotate about a rotating shaft provided in parallel with the floor of the cleaning zone and scatter dust accumulated in the floor into the inlet 181a.

The brush motor 182 may be provided adjacent to the drum brush 181, and rotate the drum brush 181 in response to a control signal of the controller 190. The brush motor 182 may rotate the drum brush 181 forwardly (a rotation in which a portion of the drum brush in contact with the floor moves from the front to the rear) or reversely (a rotation in which a portion of the drum brush in contact with the floor moves from the rear to the front) on the basis of the moving direction of the robot cleaner 100. For example, when the robot cleaner 100 moves forward, the brush motor 182 may forwardly rotate the drum brush 181 in response to a control signal of the controller 190, and when the robot cleaner 100 moves backward, the brush motor 182 may reversely rotate the drum brush 181 in response to a control signal of the controller 190.

In addition, the cleaning tool 180 may include a driving circuit for supplying a driving current to the brush motor 182 in response to a control signal of the controller 190 and a power transmission device for transmitting rotation of the brush motor 182 to the drum brush 181.

The suction motor 184 may rotate a suction fan according to a control signal of the controller 190. The suction fan is provided inside the main body 101, and may suction dust scattered by the drum brush 181.

The cleaning tool 180 may further include a driving circuit that supplies a driving current to the suction motor 184 in response to a control signal of the controller 190.

The shutter assembly 185 includes a shutter 186, a shutter motor 187, and a power transmission link 188.

The shutter 186 is provided to be protruded from the main body 101 or retracted into the main body 101. The shutter 186 may be installed adjacent the drum brush 181 of the main body 101. For example, the shutter 186 may be installed in front of the drum brush 181.

The shutter 186 may be formed in a plate shape. The shutter 186 may be formed of a flexible material. At least part of a lower portion of the shutter 186 may include a flexible material to come into contact with the floor.

The shutter motor 187 may generate power for driving the shutter 186. The shutter motor 187 may include a rotating shaft 187a.

The power transmission link 188 may transmit power generated by the shutter motor 187 to the shutter 186. The power transmission link 188 has a drive gear 188a connected to the rotating shaft 187a of the shutter motor 187, a gear shaft 188b connected to the drive gear 188a, and a slider 188c connected to the gear shaft 188b and having an arc shape.

The drive gear 188a may be connected to the rotating shaft 187a of the shutter motor 187 to transmit rotation of the shutter motor 187 to the gear shaft 188b.

The gear shaft 188b may receive the rotation of the shutter motor 187 from the drive gear 188a and transmit the rotation of the shutter motor 187 to the slider 188c uniformly to the left and right of the slider 188c.

Pinions 188d may be provided at both ends of the gear shaft 188b, and racks 188e may be formed at both ends of the slider 188c. Accordingly, rotation of the gear shaft 188b may allow the slider 188c to perform a translation motion.

The slider 188c may perform a circular arc movement along a cover 181b that is provided in a circular shape formed along a circumference of the drum brush 181, according to the rotation of the gear shaft 188b.

The shutter 186 may translate up and down by the circular arc movement of the slider 188c.

The shutter assembly 185 may be provided to remove dust accumulated at a corner of the cleaning zone. The robot cleaner 100 may lower the shutter 186 at a corner of the cleaning zone and move backward, so that dust accumulated at the corner of the cleaning zone is swept from the corner of the cleaning zone. The robot cleaner 100 may remove the dust swept from the corner of the cleaning zone using the drum brush 181.

The controller 190 may be electrically connected to the user interface 110, the first optical sensor 130, the second optical sensor 140, the collision sensor 120, the wheel drive 150, the travelling sensor 160, the wheel displacement sensor 170, and the cleaning tool 180.

The controller 190 includes a processor 191 and a memory 192.

The processor 191 receives data from the input button 111, the first optical sensor 130, the second optical sensor 140, the travelling sensor 160, and the wheel displacement sensor 170, and processes the received data.

The processor 191 may receive a user input from the input button 111. The processor 191 may receive a collision detection signal indicating a collision with an obstacle from the collision sensor 120. The processor 191 may receive information about the presence/absence of the obstacle, the position of the obstacle, and the moving direction of the robot cleaner 100 from the first optical sensor 130. The processor 191 may receive information about the occurrence of movement of the robot cleaner 100, the moving direction of the robot cleaner 100, and the moving distance of the robot cleaner 100 from the second optical sensor 140. The processor 191 may receive a step detection signal indicating a step in front of the first and second drive wheels 151 and 152 from the third optical sensor 195. The processor 191 may receive information about the rotation speeds and the rotation directions of the first and second drive wheels 151 and 152 from the travelling sensor 160. The processor 191 may receive a wheel displacement signal indicating displacement of the first and second drive wheels 151 and 152 from the wheel displacement sensor 170.

The processor 191 may output control signals for controlling the display 112, the first drive motor 153, the second drive motor 154, the brush motor 182, the suction motor 184, and the shutter motor 187 on the basis of processing of the received data.

The processor 191 may output driving control signals for controlling the first drive motor 153 and the second drive motor 154 to rotate the first drive wheel 151 and the second drive wheel 152. The controller 190 may output a brush control signal for controlling the brush motor 182 to rotate the drum brush 181 and a suction control signal for controlling the suction motor 184 to suction dust. The processor 191 may output a shutter control signal for controlling the shutter motor 187 to lower or lift the shutter 186.

The processor 191 may be integrally formed with the first image processor 136 and the second image processor 146 described above, or may be provided separately from the first image processor 136 and the second image processor 146.

The memory 192 may store a program and data used for the processor 191 to process data and output a control signal.

The memory 192 may memorize data received from the input button 111, the first optical sensor 130, the second optical sensor 140, the travelling sensor 160, and the wheel displacement sensor 170, and memorize temporary data generated during data processing by the processor 191. In addition, the memory 192 may memorize a driving control signal, a brush control signal, a suction control signal, and a shutter control signal output from the processor 191.

The memory 192 may include a volatile memory, such as a static random access memory (S-RAM), a dynamic RAM (D-RAM), and the like, and a non-volatile memory, such as a flash memory, a read only memory (ROM), an erasable programmable read only memory (EPROM), and the like.

The memory 192 may be integrally formed with the processor 191 or may be provided separately from the processor 191.

The controller 190 may further include control circuitry for controlling the operation of the robot cleaner 100 together with the processor 191 and the memory 192.

As such, the controller 190 may control the components included in the robot cleaner 100 such that the robot cleaner 100 travels and performs cleaning.

In addition, the controller 190 may store a travelling record during travel of the robot cleaner 100 and generate map data of the cleaning zone on the basis of the travelling record so as to efficiently travel and clean the cleaning zone.

The controller 190 may receive information about the rotation speeds and the rotation directions of the first and second drive wheels 151 and 152 from the travelling sensor 160 during travel of the robot cleaner 100, and determine a motion vector indicating the moving speed and the moving direction of the robot cleaner 100 on the basis of the rotation speeds and the rotation directions of the first and second drive wheels 151 and 152.

In addition, the controller 190 may receive a motion vector of the robot cleaner 100 from the second optical sensor 140 during travel of the robot cleaner 100.

The controller 190 may determine the motion vector of the robot cleaner 100 by combining the motion vector of the travelling sensor 160 and the motion vector of the second optical sensor 140. For example, the controller 190 may combine the motion vector of the travelling sensor 160 and the motion vector of the second optical sensor 140 that are assigned with different weights. The controller 190 may calculate a first weight having a value between 'o' and '1' on the basis of the amount of change in the motion vector of the travelling sensor 160 and the amount of change in the motion vector of the second optical sensor 140 and calculate a second weight from the difference between '1' and the first weight. The controller 190 may calculate the motion vector of the robot cleaner 100 from the sum of the product of the first weight and the motion vector of the travelling sensor 160 and the product of the second weight and the motion vector of the second optical sensor 140.

The controller 190 may determine the current position (a relative position from a reference point) of the robot cleaner 100 on the basis of the position of the reference point (for example, the position of a charging station) and the motion vector of the robot cleaner 100.

The controller 190 may determine the motion vector of the robot cleaner 100 at predetermined time intervals (at predetermined periods), and determine the current position of the robot cleaner 100 on the basis of the motion vector of the robot cleaner 100. The controller 190 may store a travelling record including current positions of the robot cleaner 100 acquired at predetermined time intervals. In addition, the controller 190 may generate a map of the cleaning zone on the basis of the travelling record, and efficiently clean the cleaning zone while travelling.

As described above, the robot cleaner 100 may clean the cleaning zone while travelling on the cleaning zone, and generate a travelling record on the basis of the output of the travelling sensor 160 and the output of the second optical sensor 140.

Hereinafter, the operation of the robot cleaner 100 will be described in more detail.

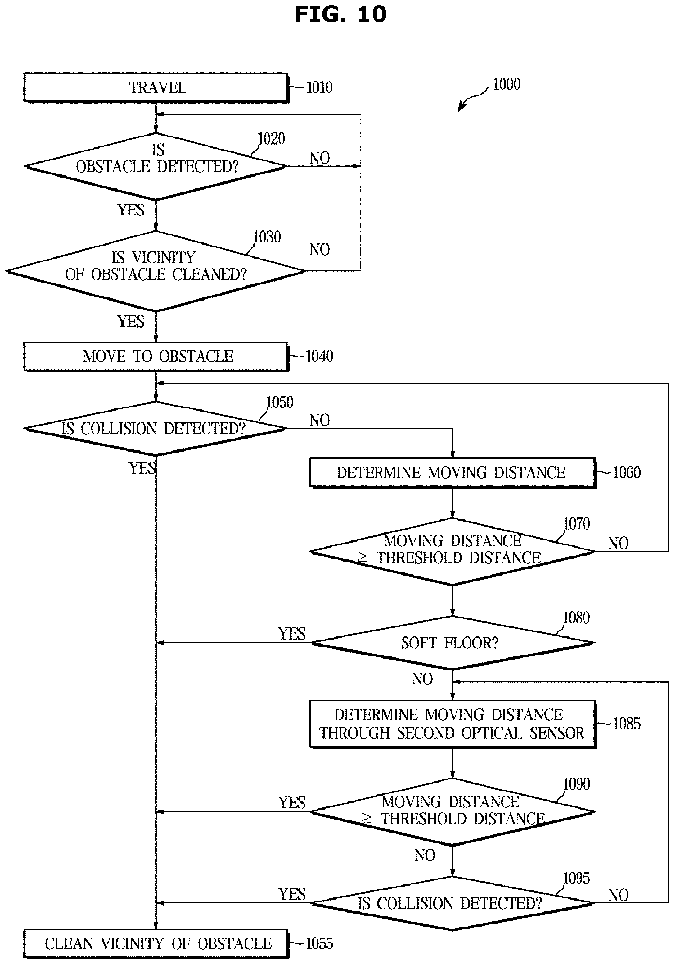

FIG. 10 is a view illustrating an example in which a robot cleaner travels according to an embodiment of the disclosure.

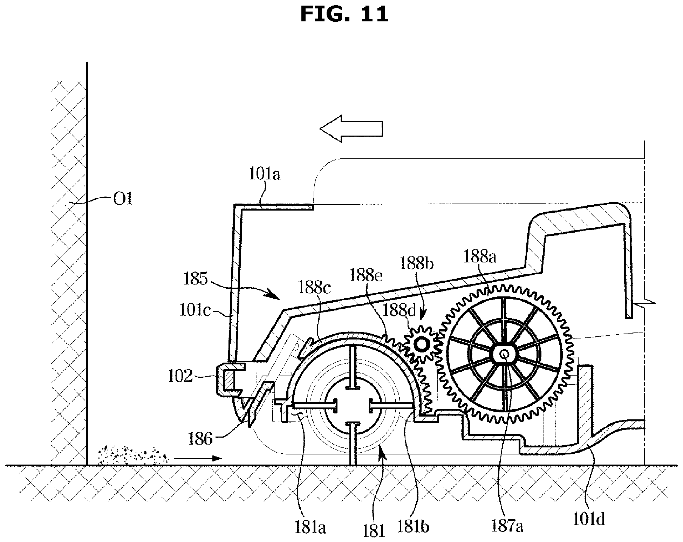

FIG. 11 is a view illustrating an example in which a robot cleaner travels toward an obstacle according to an embodiment of the disclosure.

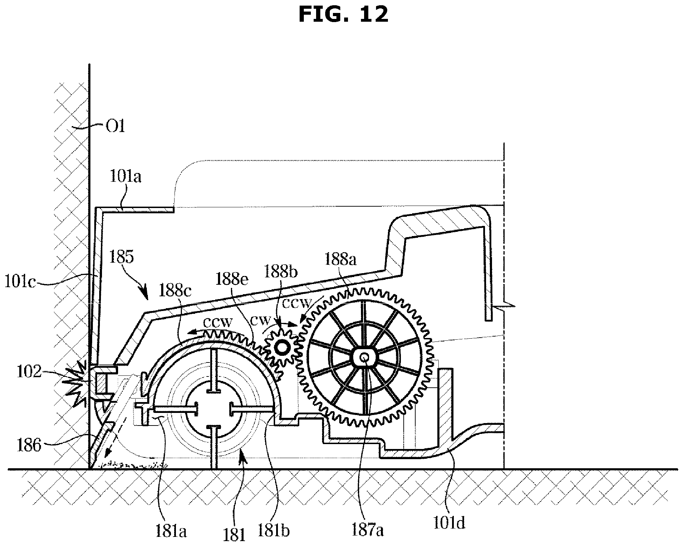

FIG. 12 is a view illustrating an example in which a robot cleaner collides with an obstacle according to an embodiment of the disclosure.

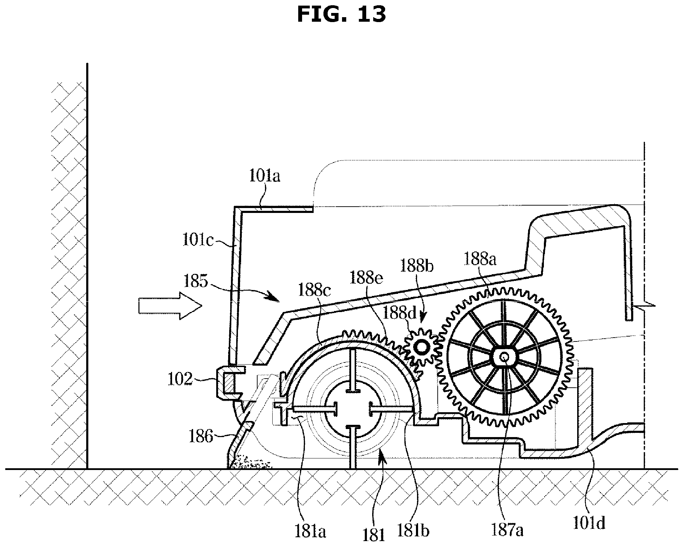

FIG. 13 is a view illustrating an example in which a robot cleaner cleans a surrounding area of an obstacle according to an embodiment of the disclosure.

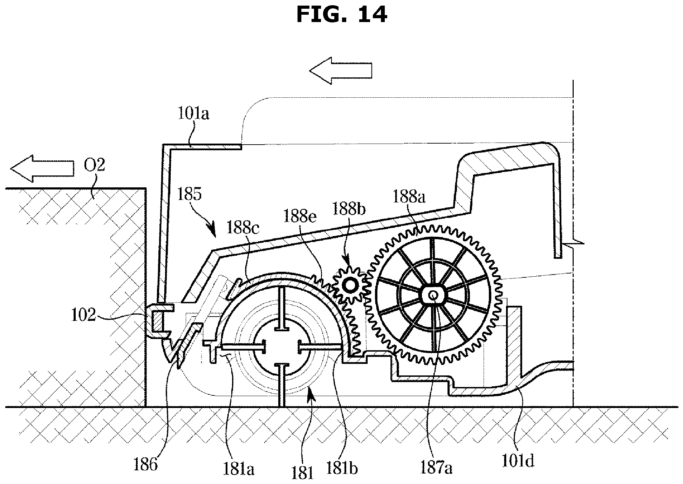

FIG. 14 is a view illustrating another example in which a robot cleaner collides with an obstacle according to an embodiment of the disclosure.

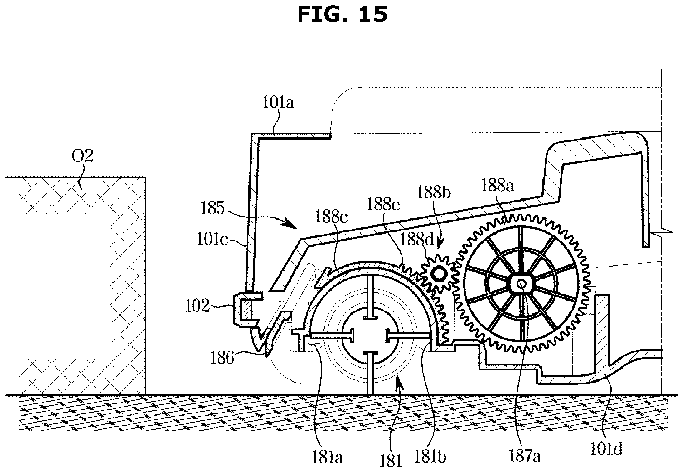

FIG. 15 is a view illustrating another example in which a robot cleaner travels toward an obstacle according to an embodiment of the disclosure.

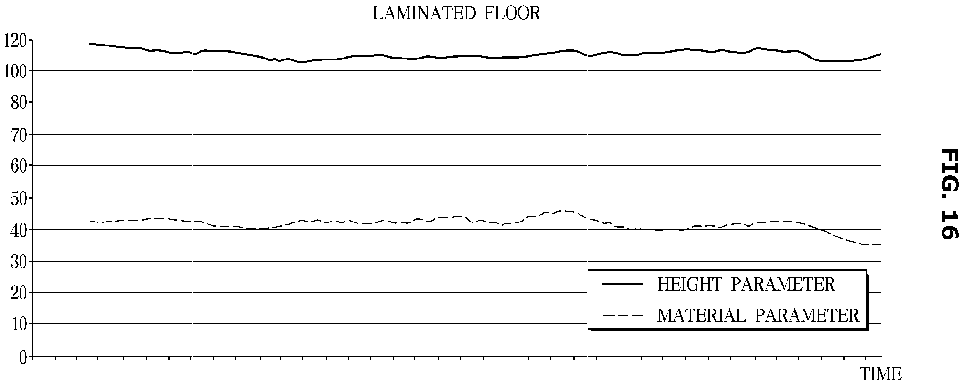

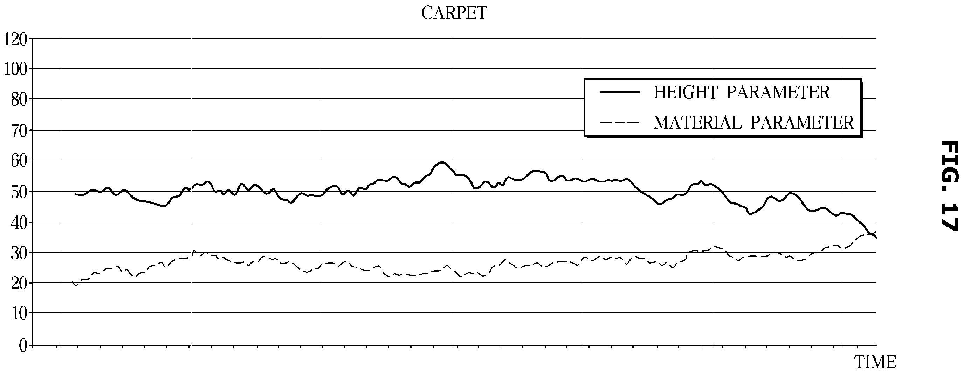

FIGS. 16 and 17 are views illustrating an example of an output of a second optical sensor included in a robot cleaner according to various embodiments of the disclosure.

Referring to FIGS. 10, 11, 12, 13, 14, 15, 16, and 17, a traveling of the robot cleaner 100 (flowchart 1000) is described.

The robot cleaner 100 travels on the cleaning zone (operation 1010).

The robot cleaner 100 may travel to clean the cleaning zone in response to a user input. For example, the user may input a user input for selecting an automatic travelling mode through the input button 111 and a user input for operating the robot cleaner 100. In response to the user input, the robot cleaner 100 may automatically travel on the cleaning zone, and clean the cleaning zone.

The controller 190 may control the first and second drive motors 153 and 154 such that the robot cleaner 100 travels on the cleaning zone.

The robot cleaner 100 determines whether an obstacle is detected (operation 1020).

The robot cleaner 100 may detect an obstacle located on a travelling path of the robot cleaner 100 while travelling. In addition, the robot cleaner 100 may collect information about the detected obstacle.

The controller 190 may identify the presence/absence of the obstacle on the basis of the data received from the first optical sensor 130, and also identify the distance to the obstacle and the direction of the obstacle.

The first optical sensor 130 may transmit infrared rays or the like toward the front of the robot cleaner 100, and detect obstacles on the basis of whether infrared rays reflected from the obstacles are received. The first optical sensor 130 may collect information about a distance from the robot cleaner 100 to the obstacle and information about a direction from the robot cleaner 100 to the obstacle on the basis of the infrared rays reflected from the obstacle.

The first optical sensor 130 may transmit data indicating whether the obstacle is detected, data indicating the distance to the obstacle, and data indicating the direction of the obstacle to the controller 190.

When no obstacle is detected (NO in operation 1020), the robot cleaner 100 continues travelling on the cleaning zone.

When an obstacle is detected (YES in operation 1020), the robot cleaner 100 determines whether to clean the vicinity of the obstacle (operation 1030).

The robot cleaner 100 may determine whether to clean the vicinity of the obstacle on the basis of the form of the obstacle, such as the width and shape.

A wall or other obstacles similar thereto (hereinafter, referred to as 'a first obstacle') may have a width greater than a reference width and have a flat contour. Dust may be likely to accumulate around walls or the like compared to the central area of the floor. The robot cleaner 100 may intensively clean the vicinity of the first obstacle, such as walls or the like, for effective cleaning.

Obstacles except for walls, for example, legs of furniture, such as chairs or dining tables, may have a width smaller than the reference width and a rounded contour. The robot cleaner 100 may avoid such obstacles as legs of furniture for smooth travelling.

In order to clean the vicinity of the first obstacle, such as walls or the like, the robot cleaner 100 identifies the form of the obstacle, and on the basis of the outer appearance of the obstacle (e.g., when the obstacle has a width greater than the reference width and a flat contour), the robot cleaner 100 may clean the vicinity of the obstacle.

The controller 190 may identify the form of the obstacle, including the width and shape of the obstacle, on the basis of the data received from the first optical sensor 130.

The first optical sensor 130 may collect information about the form of the obstacle, such as the size and shape of the obstacle, on the basis of infrared rays reflected from the obstacle, and may transmit data indicating the form of the obstacle to the controller 190.

When the obstacle has a width greater than the reference width and a flat contour, the controller 190 may clean the vicinity of the obstacle. In addition, when the obstacle has a width smaller than the reference width and a non-flat contour, the controller 190 may travel while avoiding the obstacle.

When it is determined not to clean the vicinity of the obstacle (NO in operation 1030), the robot cleaner 100 may continue travelling while avoiding obstacles, such as legs of furniture, e.g., a chair or a dining table.

When it is determined to clean the vicinity of the obstacle (YES in operation 1030), the robot cleaner 100 moves toward the obstacle (operation 1040).

When the detected obstacle is a first obstacle, such as a wall or the like, the robot cleaner 100 may move toward the first obstacle O1 to clean the vicinity of the first obstacle O1, such as a wall or the like as shown in FIG. 11.

When it is determined that the detected obstacle is a first obstacle O1, such as a wall or the like, the controller 190 may control the wheel drive 150 to move the robot cleaner 100 toward the first obstacle O1. For example, the controller 190 may control the wheel drive 150 such that the front surface 101c of the robot cleaner 100 is aligned with respect to the first obstacle O1. The controller 190 may control the wheel drive 150 such that the moving direction of the robot cleaner 100 is perpendicular to the outline of the first obstacle O1.

In the moving toward the obstacle, the robot cleaner 100 determines whether a collision with the obstacle is detected (operation 1050).

In the moving toward the first obstacle O1, the robot cleaner 100 may determine whether the main body 101 collides with the first obstacle O1.

The controller 190 may determine whether the main body 101 collides with the first obstacle O1 on the basis of the output of the collision sensor 120 while the robot cleaner 100 is moving toward the first obstacle O1.

The collision sensor 120 may detect a contact or a collision between the bumper 102 and the first obstacle O1. As illustrated in FIG. 12, the bumper 102 may transmit an impact caused by the collision to the collision sensor 120, and the collision sensor 120 may transmit a collision detection signal to the controller 190 in response to the detection of the collision between the bumper 102 and the first obstacle 01.

The controller 190 may identify that the main body 101 has collided with the first obstacle O1 in response to the collision detection signal of the collision sensor 120.

When a collision with an obstacle is detected (Yes in operation 1050), the robot cleaner 100 cleans the vicinity of the obstacle (operation 1055).

When a collision with the first obstacle O1 is detected, the robot cleaner 100 may align the front surface 101c of the main body 101 with respect to the outline of the first obstacle O1. When the controller 190 receives a collision detection signal from one of the first collision switch 121 and the second collision switch 122, the controller 190 may control the first drive motor 153 and/or the second drive motor 154 to rotate the first drive wheel 151 and/or the second drive wheel 152 until a collision detection signal is received from the first collision switch 121 and the second collision switch 122.

When the collision with the first obstacle O1 is detected, the robot cleaner 100 increases the suction force of the cleaning tool 180. When the controller 190 receives the collision detection signal from the collision sensor 120, the controller 190 may control the suction motor 184 such that the cleaning tool 180 increases the suction force. For example, the controller 190 may increase the rotational speed of the suction motor 184.

When the front surface 101c of the main body 101 is aligned with the outline of the first obstacle O1, the robot cleaner 100 may clean the vicinity of the first obstacle O1 using the shutter assembly 185.

The controller 190, in respond to the detection of the collision with the first obstacle O1 or alignment of the front surface 101c of the main body 101 with the outline of the first obstacle O1, may control the shutter motor 187 to lower the shutter 186.

For example, the controller 190 may control the shutter motor 187 to perform counterclockwise rotation as shown in FIG. 12. By the counterclockwise rotation of the shutter motor 187, the drive gear 188a may rotate in the counterclockwise direction, and the gear shaft 188b may rotate in the clockwise direction.

By the clockwise rotation of the gear shaft 188b, the slider 188c may move counterclockwise along the cover 181b of the drum brush 181. By the counterclockwise movement of the slider 188c, the shutter 186 maybe lowered. As shown in FIG. 12, the shutter 186 may be obliquely lowered toward the first obstacle O1, and after being lowered, the shutter 186 may be positioned at a corner between the first obstacle O1 and a floor Fi.

After the shutter 186 is lowered, the controller 190 may control the wheel drive 150 such that the robot cleaner 100 moves backward.

For example, with the shutter 186 lowered as shown in FIG. 13, the controller 190 may control the first and second drive motors 153 and 154 such that the robot cleaner 100 moves backward. Dust accumulated at the corner between the first obstacle O1 and the floor F1 may be swept away from the first obstacle O1 together with the shutter 186 by the backward movement of the robot cleaner 100.

After the backward movement of the robot cleaner 100, the controller 190 may control the shutter motor 187 to lift the shutter 186.

For example, the controller 190 may control the shutter motor 187 to perform clockwise rotation, so that the slider 188c may move clockwise along the cover 181b of the drum brush 181, and the shutter 186 may be lifted.

After the shutter 186 is lifted, the controller 190 may control the wheel drive 150 such that the robot cleaner 100 moves forward.

For example, the controller 190 may control the first and second drive motors 153 and 154 such that the robot cleaner 100 moves forward with the shutter 186 lifted. The dust swept away from the first obstacle O1 may be scattered and sucked by the cleaning tool 180 while the robot cleaner 100 is moving forward.

As such, the controller 190 may clean the dust in the vicinity of the first obstacle O1 in response to the detection of the collision with the first obstacle O1.

When a collision with an obstacle is not detected (NO in operation 1050), the robot cleaner 100 determines the moving distance during movement toward the obstacle (operation 1060).

During movement of the robot cleaner 100 toward the first obstacle O1, the controller 190 may determine the moving distance moved by the robot cleaner 100 after the detection of the first obstacle O1. The controller 190 combines the motion vector based on the output of the travelling sensor 160 and the motion vector based on the output of the second optical sensor, and determines the moving distance of the robot cleaner 100 on the basis of the combined motion vector of the robot cleaner 100.

The controller 190 may control the moving speed of the robot cleaner 100 on the basis of the moving distance moved by the robot cleaner 100 after the detection of the first obstacle O1. In order to reduce the impact of the robot cleaner 100 when the robot cleaner 100 collides with the first obstacle O1, the controller 190 may reduce the moving speed of the robot cleaner 100 on the basis of an increase in the moving distance of the robot cleaner 100.

The robot cleaner 100 determines whether the moving distance moved by the robot cleaner after the detection of the obstacle is greater than or equal to a threshold distance (operation 1070).

When a collision with an obstacle is not detected, the robot cleaner 100 may compare the moving distance moved after detection of an obstacle with the threshold distance.

Here, the threshold distance may depend on the distance from the robot cleaner 100 to the obstacle at the time when the robot cleaner 100 detects the obstacle. For example, the threshold distance may be equal to the distance from the robot cleaner 100 to the obstacle at the time when the robot cleaner 100 detects the obstacle. Alternatively, the threshold distance may be twice the distance from the robot cleaner 100 to the obstacle at the time when the robot cleaner 100 detects the obstacle. Alternatively, the threshold distance may be the sum of the distance from the robot cleaner 100 to the obstacle at the time when the robot cleaner 100 detects the obstacle and a predetermined reference distance.

Even when a collision occurs between an obstacle and the robot cleaner 100, the collision sensor 120 may not detect a collision between the obstacle and the robot cleaner 100. For example, referring to FIG. 14, when an obstacle O2 is lightweight, the robot cleaner 100 may move forward while pushing the obstacle O2 in the event of the collision between the obstacle O2 and the robot cleaner 100. Also, the bumper 102 may not be retracted, and the collision sensor 120 may not detect a collision between the obstacle and the robot cleaner 100.

As such, when the collision sensor 120 does not detect the collision with the obstacle O2, the robot cleaner 100 may not remove dust accumulated on the obstacle O2. In addition, due to movement of the obstacle O2, an actual cleaning zone may be changed from the map of the cleaning zone generated by the robot cleaner 100.

In order to prevent such a limitation, the controller 190 may compare the moving distance with the threshold distance of the robot cleaner 100 while controlling the wheel drive 150 such that the robot cleaner 100 moves toward the obstacle O2.

When the moving distance of the robot cleaner 100 is not greater than or equal to the threshold distance (No in operation 1070), the robot cleaner 100 determines whether a collision with an obstacle is detected (operation 1050).

When the moving distance of the robot cleaner 100 is greater than or equal to the threshold distance (YES in operation 1070), the robot cleaner 100 identifies whether the floor of the cleaning zone is a soft floor (operation 1080).

After detection of the obstacle, when the moving distance of the robot cleaner 100 is greater than or equal to the threshold distance and a collision with the obstacle is not detected, the robot cleaner 100 may determine the reliability of the moving distance calculated during movement toward the obstacle.

When the moving distance calculated during the movement toward the obstacle is high, the robot cleaner 100 may determine that the obstacle is a lightweight obstacle O2 and thus the collision sensor 120 has failed to detect a contact between the obstacle O2 and the robot cleaner 100.

On the other hand, when the reliability of the moving distance calculated during the movement toward the obstacle is low, the robot cleaner 100 may recalculate the moving distance of the robot cleaner 100 after the detection of the obstacle.

For example, as shown in FIG. 15, when the robot cleaner 100 travels on a soft floor, such as a carpet, friction between the first and second drive wheels 151 and 152 and the soft floor may be reduced. In addition, since the drum brush 181 rotates and the suction fan suctions dust, the travelling resistance of the robot cleaner 100 may increase. For this reason, when the robot cleaner 100 travels on a soft floor, such as a carpet, a slip (a slippage) between the first and second drive wheels 151 and 152 and the floor may occur.

When a slip of the first and second drive wheels 151 and 152 occurs, an error of the motion vector detected by the travelling sensor 160 may increase. Specifically, even when the travelling sensor 160 determines that the robot cleaner 100 has moved on the basis of rotations of the first and second drive wheels 151 and 152, the robot cleaner 100 may not have actually moved due to the slip of the first and second drive wheels 151 and 152.

Due to the slip of the first and second drive wheels 151 and 152, an error may occur in the moving distance calculated by the controller 190. For example, the moving distance of the robot cleaner 100 calculated by the controller 190 may be greater than the distance actually moved by the robot cleaner 100. Therefore, even when the moving distance actually moved by the robot cleaner 100 is smaller than the threshold distance, the controller 190 may determine that the moving distance of the robot cleaner 100 is greater than or equal to the threshold distance.

The controller 190 may identify the material of the floor so as to determine the reliability of the calculated moving distance of the robot cleaner 100. In detail, the controller 190 may identify whether the floor is a soft floor, such as a carpet.

As described above, the second optical sensor 140 may provide the controller 190 with information about the occurrence of the robot cleaner 100 and the motion vector of the robot cleaner 100. In addition, the second optical sensor 140 may output a material parameter indicating the material of the floor and a height parameter indicating the height from the floor.

The second optical sensor 140 may output different material parameters and height parameters according to different materials of floors. For example, when the floor of the cleaning zone is a laminated floor, the material parameter maybe between about 40 and 50, and the height parameter maybe about 100, as shown in FIG. 16. In comparison, when the floor of the cleaning zone is a carpet, the material parameter may be between about 20 and 30, and the height parameter may be about 50, as shown in FIG. 17.

As such, since the second optical sensor 140 outputs different material parameters and height parameters according to different materials of floors, the controller 190 may identify the material of the floor on the basis of the material parameter and the height parameter.

When the floor of the cleaning zone is not a soft floor (No in operation 1080), the cleaning robot 100 cleans the vicinity of the obstacle (operation 1055).

Since the floor is not a soft floor, the moving distance of the robot cleaner 100 calculated by the travelling sensor 160 may have a high reliability. In addition, since the moving distance of the robot cleaner 100 is greater than or equal to the threshold distance, the controller 190 may determine that the obstacle is a lightweight obstacle O2 and the robot cleaner 100 has come into contact with the obstacle O2. Thus, the controller 190 may control the cleaning tool 180 and the wheel drive 150 to clean the vicinity of the obstacle.

When the floor of the cleaning zone is a soft floor (YES in operation 1080), the robot cleaner 100 determines the moving distance on the basis of the output of the second optical sensor 140 (operation 1085).

Since the floor is a soft floor, the moving distance of the robot cleaner 100 calculated by the travelling sensor 160 may have a low reliability.

Accordingly, the controller 190 may exclude the output of the travelling sensor 160 and recalculate the moving distance of the robot cleaner 100 only on the basis of the output of the second optical sensor 140.

Thereafter, the robot cleaner 100 determines whether the moving distance calculated only on the basis of the output of the second optical sensor 140 is greater than or equal to the threshold distance (operation 1090).

The controller 190 may compare the moving distance of the robot cleaner 100 calculated only on the basis of the output of the second optical sensor 140 with the threshold distance. Here, the threshold distance may depend on the distance from the robot cleaner 100 to the obstacle at the time when the robot cleaner 100 detects an obstacle.

When the moving distance of the robot cleaner 100 is not greater than or equal to the threshold distance (NO in operation 1090), the robot cleaner 100 determines whether a collision with an obstacle is detected (operation 1095).

When a collision with an obstacle is detected (YES in operation 1095), the robot cleaner 100 cleans the vicinity of the obstacle (operation 1055), and when a collision with an obstacle is not detected (NO in operation 1095), the robot cleaner 100 determines the moving distance on the basis of the output of the second optical sensor 140 (operation 1085).

When the moving distance of the robot cleaner 100 is greater than or equal to the threshold distance (NO in operation 1090), the robot cleaner 100 cleans the vicinity of the obstacle (operation 1055).

As described above, the robot cleaner 100 may approach an obstacle and clean the vicinity of the obstacle. After detecting the obstacle, the robot cleaner 100 may calculate the moving distance using the second optical sensor (an optical flow sensor), thereby more accurately determining the occurrence of a contact with the obstacle.

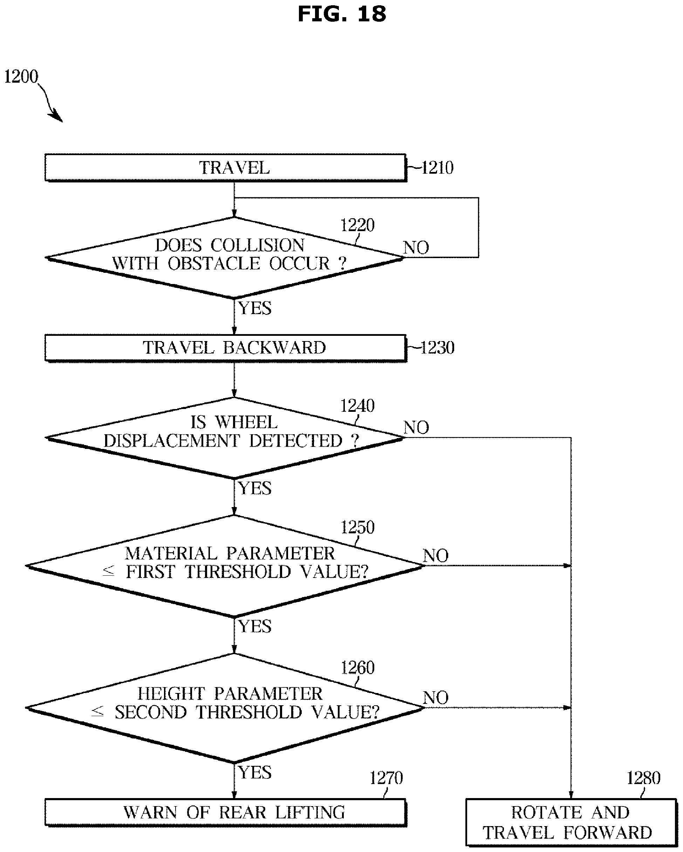

FIG. 18 is a view illustrating an example in which a travelling error of a robot cleaner is detected according to an embodiment of the disclosure.

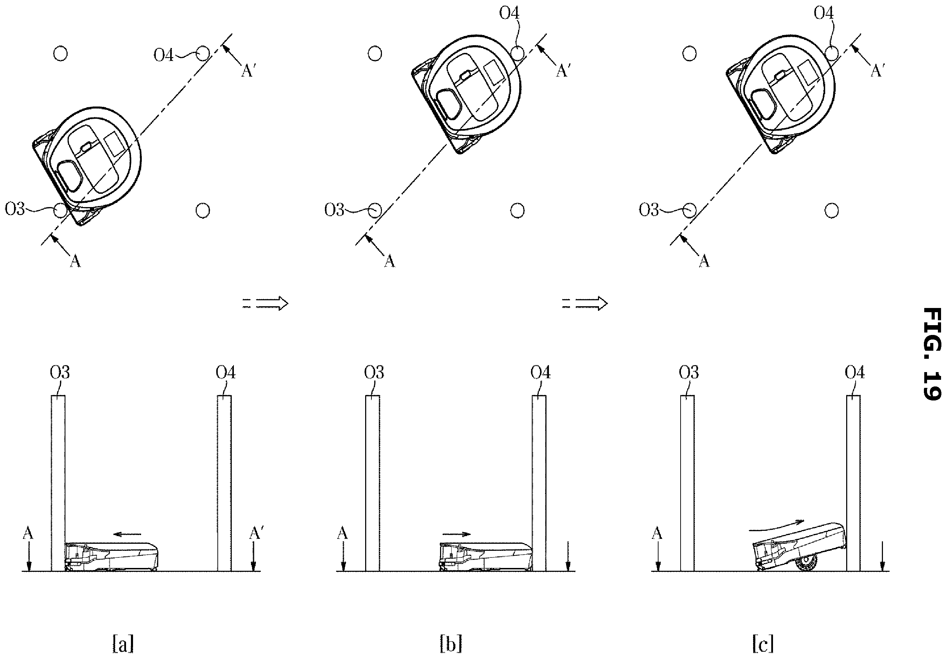

FIG. 19 is a view illustrating an example in which a robot cleaner travels according to an embodiment of the disclosure.

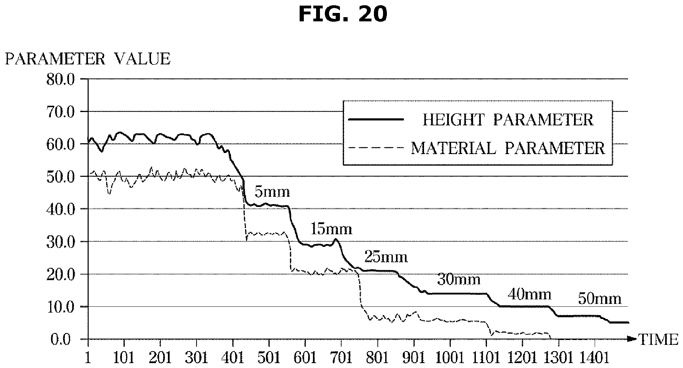

FIG. 20 is a view illustrating an example of an output of a second optical sensor included in a robot cleaner according to an embodiment of the disclosure.

Referring to FIGS. 18, 19, and 20, travelling error detection (flowchart 1200) of the robot cleaner 100 is described.

The robot cleaner 100 travels on the cleaning zone (operation 1210).

Operation 1210 may be the same as operation 1010 described with reference to FIG. 10.

The robot cleaner 100 determines whether a collision with an obstacle is detected (operation 1220).

Operation 1220 may be the same as operation 1050 described with reference to FIG. 10.

For example, as shown in part [a] of FIG. 19, the robot cleaner 100 may collide with an obstacle O3 having a narrow width, such as legs of a furniture, during travel, and the controller 190 may detect a collision of the main body 101 with the obstacle O3 on the basis of an output of the collision sensor 120.

When no collision with an obstacle is detected (NO in operation 1220), the robot cleaner 100 continues travelling.

When a collision with an obstacle is detected (YES in operation 1220), the robot cleaner 100 travels backward (operation 1230).

Since the robot cleaner 100 has a front surface 101c, at least part of which is flat, the robot cleaner 100 has difficulty immediately turning directions after collision with an obstacle. The robot cleaner 100 may travel backward as shown in part [b] of FIG. 19 to travel while avoiding obstacles.

In response to detection of a collision with the obstacle O3, the controller 190 may control the wheel drive 150 such that the robot cleaner 100 moves backward.

The robot cleaner 100 determines whether the wheel displacement is detected during the backward travel (operation 1240).

During backward travel, rear lifting of the robot cleaner 100 may occur due to an obstacle located behind the robot cleaner 100. For example, the obstacle, such as furniture, may include a plurality of legs O3 and O4 as shown in part [c] of FIG. 19. In addition, the robot cleaner 100 that has collided with one of the plurality of legs O3 and O4 may collide with another leg O4 (a rear obstacle) while moving backward. However, since the bumper 102 and the collision sensor 120 are not provided on the rear portion of the robot cleaner 100, the robot cleaner 100 continues moving backward, and thus the rear side of the main body 101 may be lifted due to the rear obstacle O4. Due to the rear lifting of the main body 101, at least one of the first and second drive wheels 151 and 152 may be displaced from the original position.

The controller 190 may determine wheel displacement on the basis of the output of the wheel displacement sensor 170.

The wheel displacement sensor 170 may detect that at least one of the first drive wheel 151 or the second drive while 152 is displaced from the original position, and may transmit a wheel displacement signal to the controller 190. The controller 190 may identify that at least one of the first and second drive wheels 151 and 152 is displaced from the original position on the basis of the wheel displacement signal.

When the wheel displacement is not detected (NO in operation 1240), the robot cleaner 100, after backward travelling, rotates and moves forward again (operation 1280).

Since the robot cleaner 100 having collided with the front obstacle O3 may move backward, the robot cleaner 100 may rotate without interference of the front obstacle O3, and after the rotation, the robot cleaner 100 may move forward while avoiding the front obstacle O3.

When the wheel displacement is detected (YES in operation 1240), the robot cleaner 100 determines whether the material parameter is equal to or less than a first threshold value (operation 1250).When the material parameter is less than or equal to the first threshold (YES in operation 1250), the robot cleaner 100 determines whether the height parameter is less than or equal to a second threshold (operation 1260). When the height parameter is less than or equal to the second threshold (YES in operation 1260), the robot cleaner 100 warns of a rear lifting (operation 1270).

As described above, the rear lifting of the robot cleaner 100 may occur due to an obstacle located behind the robot cleaner 100 during the backward movement, and the robot cleaner 100 with the wheel displacement may be spaced apart from the floor (becoming distant from the floor) due to the rear lifting.

The controller 190 may determine whether the rear side of the main body 101 is lifted on the basis of the output of the second optical sensor 140.

As described above, the second optical sensor 140 may be installed at the rear end of the main body 101. In addition, the second optical sensor 140 may output a material parameter indicating the material of the floor and a height parameter indicating the height from the floor. The second optical sensor 140 may output different material parameters and height parameters according to different heights of the robot cleaner 100 from the floor. For example, as illustrated in FIG. 20, when the height of the robot cleaner 100 increases, the material parameter and the height parameter output from the second optical sensor 140 may decrease. When the robot cleaner 100 is placed on the floor, the material parameter may be about 50 and the height parameter maybe about 60. When the robot cleaner 100 is lifted approximately 15 mm from the floor, the material parameter may be approximately 30 and the height parameter may be approximately 40. When the robot cleaner 100 is lifted approximately 20 mm from the floor, the material parameter may be approximately 20.

As such, since the second optical sensor 140 outputs different material parameters and height parameters according to the heights of the robot cleaner 100 from the floor, the controller 190 may identify the height of the robot cleaner 100 on the basis of the material parameter and the height parameter. In addition, the controller 190 may determine whether the rear end of the main body 101 is spaced apart from the floor on the basis of the material parameter and the height parameter.

In detail, the controller 190 may compare the material parameter with the first threshold and compare the height parameter with the second threshold.

When the material parameter is less than or equal to the first threshold and the height parameter is less than or equal to the second threshold, the controller 190 may identify that the rear end of the main body 101 is spaced apart from the floor.

The controller 190 may warn the user of the rear lifting through a sound and/or an image in response to the rear end of the main body 101 being spaced apart from the floor. For example, the controller 190 may control the display 112 to display a message indicating a rear lifting.

When the material parameter is not less than or equal to the first threshold (No in operation 1250) or the height parameter is not less than or equal to the second threshold (No in operation 1260), the robot cleaner 100, after the backward travel, rotates, and then travels forward again (operation 1280).

As described above, the robot cleaner 100 may identify the rear lifting of the main body 101 on the basis of the output of the wheel displacement sensor 170 and the output of the second optical sensor 140. As a result, the robot cleaner 100 may warn the user that the travelling of the robot cleaner 100 is stopped due to the rear lifting of the main body 101.

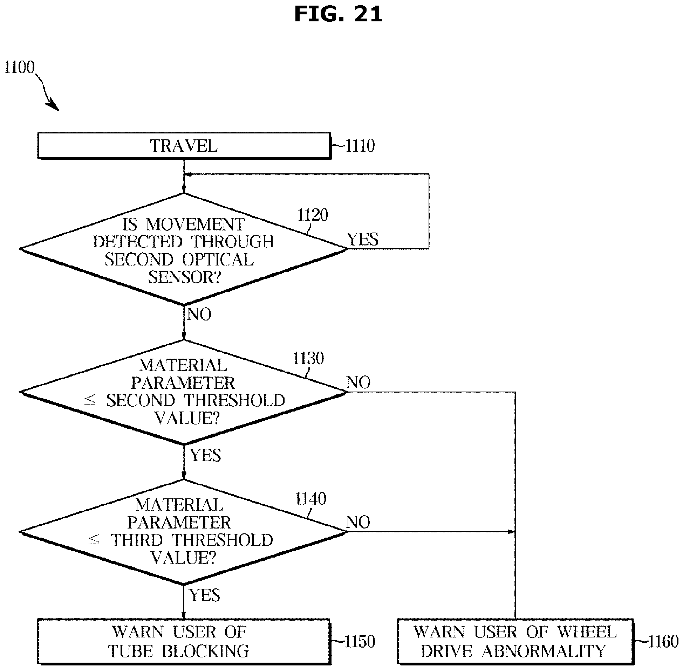

FIG. 21 is a view illustrating an example in which an operation error of a robot cleaner is detected according to an embodiment of the disclosure.

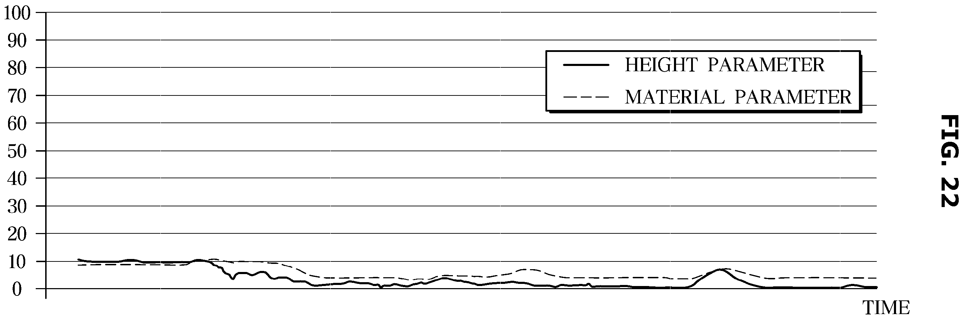

FIG. 22 is a view illustrating an example of an output of a second optical sensor included in a robot cleaner according to an embodiment of the disclosure.

Referring to FIGS. 21 and 22, operation error detection (flowchart 1100) of the robot cleaner 100 is described.

The robot cleaner 100 travels on the cleaning zone (operation 1110).

Operation 1110 may be the same as operation 1010 described with reference to FIG. 10.

The robot cleaner 100 determines whether a movement is detected by the second optical sensor 140 during travel (operation 1120).

As described above, the second optical sensor 140 may provide the controller 190 with information about the occurrence of a movement of the robot cleaner 100 and the motion vector of the robot cleaner 100. For example, the second optical sensor 140 may output "o" when a movement of the robot cleaner 100 is not detected, and output a specific value when a movement of the robot cleaner 100 is detected.

The controller 190 may determine whether the movement of the robot cleaner 100 is detected on the basis of the output of the second optical sensor 140.

When the movement of the robot cleaner 100 is detected (YES in operation 1120), the robot cleaner 100 continues travelling.

When the movement of the robot cleaner 100 is not detected (NO in operation 1120), the robot cleaner 100 determines whether the material parameter is less than or equal to a third threshold value (operation 1130). When the material parameter is less than or equal to the third threshold (YES in operation 1130), the robot cleaner 100 determines whether the height parameter is less than or equal to a fourth threshold (operation 1140). When the height parameter is less than or equal to the fourth threshold (YES in operation 1140), the robot cleaner 100 warns of the tube blocking (operation 1150).

When a movement is not detected by the second optical sensor 140, the controller 190 may determine whether the tube 147, on which the second optical sensor 140 is installed, is blocked by foreign substances.

As described above, the second optical sensor 140 may be installed on the tube 147 in the main body 101. When the tube 147 is blocked by foreign substances, such as dust, the second optical sensor 140 may not detect a movement of the robot cleaner 100. In addition, the second optical sensor 140 may output a material parameter and a height parameter having a specific value. For example, as illustrated in FIG. 22, the material parameter and the height parameter output from the second optical sensor 140 may be approximately 'o'.

Accordingly, the controller 190 may determine whether the tube 147 is blocked on the basis of the material parameter and the height parameter.

In detail, the controller 190 may compare the material parameter with the third threshold and compare the height parameter with the fourth threshold. When the material parameter is less than or equal to the third threshold and the height parameter is less than or equal to the fourth threshold, the controller 190 may identify that the tube 147 is blocked.

The controller 190 may warn the user of the blockage of the tube through sound and/or an image in response to the blockage of the tube 147. For example, the controller 190 may control the display 112 to display a message indicating a tube blockage.

When the material parameter is not less than or equal to the first threshold (NO in operation 1130) or the height parameter is not less than or equal to the second threshold (NO in operation 1140), the robot cleaner 100 warns of an abnormality of the wheel drive 150 (operation 1160).

When a movement of the robot cleaner 100 is not detected by the second optical sensor 140 while the tube 147 is not blocked, the robot cleaner 100 may identify an abnormality of the wheel drive 150.

The controller 190 may warn the user of an abnormality of the wheel drive 150 through a sound or an image. For example, the controller 190 may control the display 112 to display a message indicating an abnormality of the wheel drive 150.

As described above, the robot cleaner 100 may identify an abnormality of the second optical sensor 140 on the basis of the output of the second optical sensor 140. In addition, the robot cleaner 100 may identify an abnormality of the wheel drive 150 on the basis of the output of the second optical sensor 140.

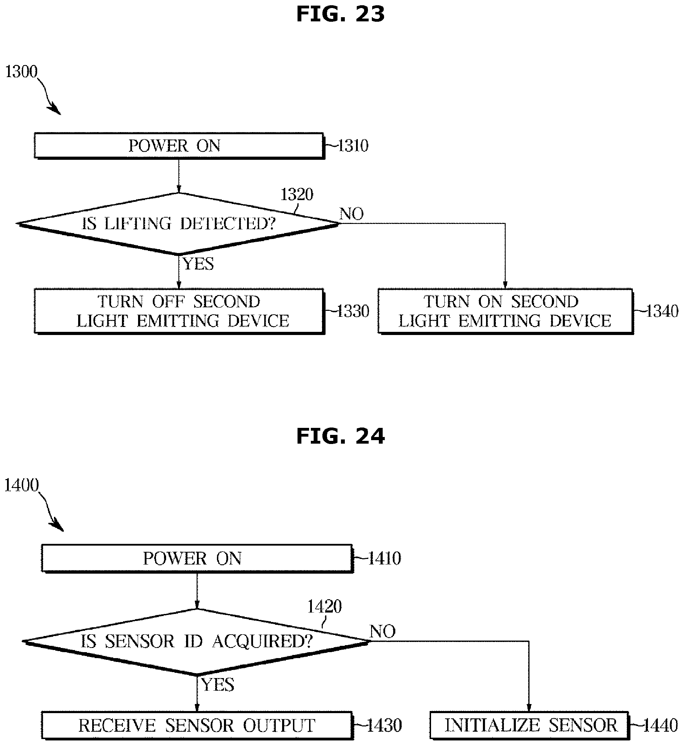

FIG. 23 is a view illustrating an example in which a second optical sensor included in a robot cleaner is inactivated according to an embodiment of the disclosure.

Referring to FIG. 23, an operation for deactivating the second optical sensor 140 (flowchart 1300) is described.

The robot cleaner 100 is powered on (operation 1310).

The robot cleaner 100 may be powered on in response to a user input. For example, the user may input a user input for turning on the power of the robot cleaner 100 through the input button 111.

In response to a user input for turning on the power, the controller 190 may control the robot cleaner 100 to travel on the cleaning zone or control the robot cleaner 100 to wait at a charging station for charging.

The robot cleaner 100 determines whether a lifting of the main body 101 is detected (operation 1320).

The robot cleaner 100 may determine whether the main body 101 has been lifted during operation.

The controller 190 may determine whether the main body 101 has been lifted on the basis of the output of the third optical sensor 195.

The third optical sensor 195 is installed on the bottom surface 101d of the main body 101 of the robot cleaner 100, and may receive infrared rays or the like reflected from the cleaning zone. The controller 190 may receive a step detection signal from the third optical sensor 195, and determine whether the main body 101 is spaced apart from the floor on the basis of the step detection signal. In addition, the controller 190 may determine whether the main body 101 has been lifted on the basis of whether the step detection signal is received from the third optical sensor 195.

However, the disclosure is not limited thereto, and the controller 190 may determine whether the main body 101 has been lifted on the basis of the output of the third optical sensor 195 and the output of the wheel displacement sensor 170. For example, the controller 190 may determine whether the main body 101 has been lifted on the basis of whether a step detection signal is received from the third optical sensor 195 and a wheel displacement signal is received from the wheel displacement sensor 170.

When the lifting of the main body 101 is detected (YES in operation 1320), the robot cleaner 100 turns off the second light emitting device 142 included in the second optical sensor 140 (operation 1330).

The second light emitting device 142 of the second optical sensor 140 may transmit visible rays downward from the bottom surface 101d of the main body 101.

When the main body 101 is lifted, the second light emitting device 142 may face the user, and the second light emitting device 142 may emit visible rays toward the user. To prevent such a limitation, the controller 190 may control the second optical sensor 140 to turn off the second light emitting device 142 in response to detecting the lifting of the main body 101.

When the lifting of the main body 101 is not detected (NO in operation 1320), the robot cleaner 100 turns on the second light emitting device 142 included in the second optical sensor 140 (operation 1340).

When the main body 101 is not lifted, the second light emitting device 142 may transmit visible rays toward the floor of the cleaning zone.

Accordingly, the controller 190 may control the second optical sensor 140 to turn on the second light emitting device 142 in response to not detecting the lifting of the main body 101.

As described above, the robot cleaner 100 may determine whether the main body 101 has been lifted using the third optical sensor 195 installed on the bottom surface 101d of the main body 101, and when it is determined that the main body 101 has been lifted, the robot cleaner 100 may stop light transmission of the second optical sensor 140. Accordingly, the robot cleaner 100 may determine the lifting of the main body 101 more accurately, and may prevent the visible rays from being transmitted toward the user.

FIG. 24 is a view illustrating an example in which an operation error of a second optical sensor included in a robot cleaner is detected according to an embodiment of the disclosure.

Referring to FIG. 24, operation error detection (flowchart 1400) of the second optical sensor 140 is described.

The robot cleaner 100 is powered on (operation 1410).

Operation 1410 may be the same as operation 1310 described with reference to FIG. 23.

The robot cleaner 100 determines acquisition of sensor IDs of the sensors (operation 1420).

Sensors are assigned sensor IDs for identifying each sensor, and may store the sensor IDs.

The controller 190 may read the sensor IDs from the respective sensors to confirm normal operations of the sensors. For example, the controller 190 may read the sensor ID from the second optical sensor 140.

In addition, the controller 190 may determine whether the sensor IDs is acquired from the sensors.

When a sensor ID is acquired (YES in operation 1420), the robot cleaner 100 receives an output from the sensor (operation 1430).

The controller 190 may receive an output from a sensor indicated by the acquired sensor ID. For example, when a sensor ID of the second optical sensor 140 is acquired, the controller 190 may receive information about the occurrence of movement of the robot cleaner 100 and the motion vector of the robot cleaner 100 from the second optical sensor 140.

When a sensor ID is not acquired (NO in operation 1420), the robot cleaner 100 initializes the sensor (operation 1440).

When a sensor malfunctions or is disconnected, the controller 190 may not acquire a sensor ID from the sensor.

The controller 190 may initialize the sensor to check the operation of the sensor. For example, when the sensor ID of the second optical sensor 140 is not acquired, the controller 190 may initialize the second optical sensor 140.

As described above, the robot cleaner 100 may check the connection state of the sensors.

A robot cleaner according to one aspect of the disclosure includes: a main body; a drive wheel installed on the body; a drive motor configured to rotate the drive wheel; a travelling sensor configured to detect rotations of the drive wheel; a first optical sensor configured to detect an obstacle located in a moving direction of the body; a cleaning tool configured to clean a floor; a second optical sensor configured to acquire an image of the floor; and a processor electrically connected to the drive motor, the travelling sensor, the first optical sensor, and the second optical sensor, wherein the processor is configured to: determine a first moving distance moved by the main body on the basis of an output of the travelling sensor and an output of the second optical sensor; determine a second moving distance moved by the main body on the basis of the output of the second optical sensor in response to detection of the obstacle; and control the cleaning tool to clean the floor in a vicinity of the obstacle in response to the second moving distance on the basis of the output of the second optical sensor that is greater than a threshold distance. Therefore, the robot cleaner may clean the dust accumulated in the vicinity of a moving obstacle.

The threshold distance may depend on a distance to the obstacle at the time when the obstacle is detected. Therefore, the robot cleaner may determine that the robot cleaner has approached a moving obstacle.

The cleaning tool may include: a shutter provided on the main body and configured to protrude toward the floor or retract into the main body; and a drum brush configured to sweep dust on the floor. The processor, in response to the second moving distance moved by the main body after the detection of the obstacle that is greater than the threshold distance, is configured to control the cleaning tool such that the shutter is lowered toward the floor and control the drive motor such that the main body moves backward. Therefore, the robot cleaner may sweep dust accumulated in the vicinity of the obstacle from the obstacle, and remove the dust.

The robot cleaner may include a collision sensor electrically connected to the processor and configured to detect collision with the obstacle, wherein the processor, in response to collision of the obstacle being detected by the collision sensor, is configured to control the cleaning tool such that the shutter is lowered toward the floor and control the drive motor such that the main body moves backward. Therefore, the robot cleaner may remove dust accumulated in the vicinity of a fixed obstacle.

The second optical sensor may include a tube provided on the main body, a support member supported by the tube, and a light emitting device and an image sensor provided on the support member, and the processor determines the moving direction and the second moving distance moved by the main body on the basis of an image of the floor acquired by the image sensor. The processor may determine the moving direction and the second moving distance of the main body on the basis of a difference between the acquired image and a previously stored image of the floor. Therefore, the robot cleaner may accurately determine the moving distance on the floor that has a high travelling resistance.

The tube is provided with an assembly protrusion, and the support member is provided with an assembly groove at a position corresponding to a position of the assembly protrusion. Therefore, incorrect assembly between the tube and the support member may be prevented.

The robot cleaner may further include a third optical sensor provided on a bottom surface of the main body and configured to emit light toward the floor and receive light reflected from the floor. The processor controls the third optical sensor to emit light toward the floor and in response to non-reception of light reflected from the floor, turns off the light emitting device of the second optical sensor. Therefore, light is prevented from being emitted toward the user.

A method of controlling a robot cleaner including a main body and a drive wheel installed on the main body according to one aspect of the disclosure includes: driving the drive wheel; detecting rotations of the drive wheel; acquiring an image of a floor; determining a second moving distance moved by the robot cleaner on the basis of the rotations of the drive wheel and the image of the floor; calculating a second moving distance moved by the robot cleaner on the basis of the image of the floor in response to detection of an obstacle located in a moving direction of the main body; and cleaning the floor in a vicinity of the obstacle in response to the distance moved by the main body that is calculated on the basis of the image of the floor as being greater than a threshold distance. Thereby, the robot cleaner may remove dust accumulated in the vicinity of a moving obstacle.

The threshold distance depends on a distance to the obstacle at the time when the obstacle is detected. Therefore, the robot cleaner may determine that the robot cleaner has approached a moving obstacle.

The cleaning of the floor in the vicinity of the obstacle may include: protruding a shutter in a direction toward the floor; moving the main body in a direction away from the obstacle; retracting the shutter into the main body; moving the main body toward the obstacle; and suctioning dust on the floor. Therefore, the robot cleaner may sweep dust accumulated in the vicinity of the obstacle from the obstacle, and remove the dust.

The method may further include cleaning the floor in the vicinity of the obstacle in response to detection of collision with the obstacle. Therefore, the robot cleaner may clean dust accumulated in the vicinity of a fixed obstacle.

The calculating of the second moving distance moved by the robot cleaner on the basis of the image of the floor may include calculating the second moving distance moved by the robot cleaner on the basis of the acquired image of the floor and a previously stored image of the floor. Therefore, the robot cleaner may accurately determine the moving distance on the floor that has a high travelling resistance.

A robot cleaner according to one aspect of the disclosure includes: a main body; a drive wheel installed on the main body; a drive motor configured to rotate the drive wheel; a wheel displacement sensor configured to detect separation of the drive wheel; an optical sensor configured to acquire an image of a floor; and a processor electrically connected to the drive motor, the wheel displacement sensor, and the optical sensor, wherein the processor detects a lifting of the main body in response to an output of the wheel displacement sensor and the optical sensor. Therefore, the robot cleaner may determine the lifting of the main body while travelling.

The robot cleaner may further include a collision sensor electrically connected to the processor and configured to detect collision with an obstacle, wherein the processor is configured to, in response to collision with the obstacle being detected by the collision sensor, control the drive motor such that the main body moves backward in a direction away from the obstacle, and detect a lifting of the main body during the backward movement. Therefore, the robot cleaner may determine the lifting of the main body during the backward travel.

The robot cleaner may further include a display electrically connected to the processor, wherein the processor controls the display to display a message indicating that the main body has been lifted in response to detection of a lifting of the main body. Therefore, the robot cleaner may inform the user that the main body is lifted.

The optical sensor may include: a tube provided on the main body; a support member supported by the tube; and a light emitting device and an image sensor provided on the support member. The processor determines the moving direction and the moving distance of the main body on the basis of an image of the floor acquired by the image sensor. Therefore, the robot cleaner may accurately determine the moving distance on the floor that has a high travelling resistance.

As is apparent from the above, the robot cleaner can generate accurate travelling records regardless of material of a floor.

The robot cleaner can generate accurate travelling records regardless of the travelling situation by including an optical flow sensor.

The robot cleaner can distinguish a case in which a rear end of the robot cleaner is lifted while reversing from a case in which a wheel of the robot cleaner is fallen between steps.

Embodiments of the disclosure have been described above. In the embodiments described above, some components may be implemented as a "module". Here, the term 'module' means, but is not limited to, a software and/or hardware component, such as a Field Programmable Gate Array (FPGA) or Application Specific Integrated Circuit (ASIC), which performs certain tasks. A module may advantageously be configured to reside on the addressable storage medium and configured to execute on one or more processors.

Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The operations provided for in the components and modules may be combined into fewer components and modules or further separated into additional components and modules. In addition, the components and modules maybe implemented such that they execute one or more central processing units (CPUs) in a device.

With that being said, and in addition to the above described embodiments, embodiments can thus be implemented through computer readable code/instructions in/on a medium, e.g., a computer readable medium, to control at least one processing element to implement any above described embodiment. The medium can correspond to any medium/media permitting the storing and/or transmission of the computer readable code.

The computer-readable code can be recorded on a medium or transmitted through the Internet. The medium may include Read Only Memory (ROM), Random Access Memory (RAM), Compact Disc-Read Only Memories (CD-ROMs), magnetic tapes, floppy disks, and optical recording medium. Also, the medium may be a non-transitory computer-readable medium. The media may also be a distributed network, so that the computer readable code is stored or transferred and executed in a distributed fashion. Still further, as only an example, the processing element could include at least one processor or at least one computer processor, and processing elements may be distributed and/or included in a single device.

## Claims

1. A robot cleaner (100) comprising:
a main body (101);
a drive wheel (151, 152) installed on the main body (101);
a drive motor (153, 154) configured to rotate the drive wheel (151, 152);
a travelling sensor (160) configured to detect rotation of the drive wheel (151, 152);
a first optical sensor (130) configured to detect an obstacle located in a moving direction in which the main body (101) moves;
a cleaning tool (180) configured to clean a floor;
a second optical sensor (140) configured to acquire an image of the floor and output a motion vector of the main body (101);
the robot cleaner **characterized by** a collision sensor (120) configured to detect a collision with the obstacle; and
at least one processor electrically connected to the drive motor (153, 154), the travelling sensor (160), the first optical sensor (130), the second optical sensor (140) and the collision sensor (120),
wherein the at least one processor is configured to:
determine a first moving distance moved by the main body (101) based on an output of the travelling sensor (160);
in response to detecting the obstacle, determine a second moving distance, by which the main body (101) moves toward the obstacle after the detecting of the obstacle, based on the output from the second optical sensor (140); and
control the cleaning tool (180) to clean the floor in a vicinity of the obstacle in response to the second moving distance being greater than or equal to a threshold distance, which is based on a distance to the obstacle identified by the first optical sensor at a time when the obstacle is detected; and
control the cleaning tool (180) to clean the floor in the vicinity of the obstacle in response to the second moving distance being less than the threshold distance and the collision with the obstacle being detected.

2. The robot cleaner of claim 1, wherein the cleaning tool includes:
a shutter (186) provided on the main body, the shutter configured to protrude toward the floor or retract into the main body; and
a drum brush (181) configured to sweep dust on the floor.

3. The robot cleaner of claim 2, wherein, in response to the second moving distance moved by the main body after the detection of the obstacle that is greater than the threshold distance, the at least one processor is further configured to control the cleaning tool such that the shutter is lowered toward the floor and control the drive motor such that the main body moves backward.

4. The robot cleaner of claim 2, further comprising: in response to collision of the obstacle being detected by the collision sensor, the at least one processor is further configured to control the cleaning tool such that the shutter is lowered toward the floor, and control the drive motor such that the main body moves backward.

5. The robot cleaner of claim 1,
wherein the second optical sensor includes:
a tube (147) provided on the main body,
a support member (145) supported by the tube, and
a light emitting device (132, 142) and an image sensor (131, 141) provided on the support member, and
wherein the at least one processor is further configured to determine the moving direction and the second moving distance of the main body based on an image of the floor being acquired by the image sensor.

6. The robot cleaner of claim 5, wherein the at least one processor is further configured to determine the moving direction and the second moving distance of the main body based on a difference between the acquired image of the floor and a previously stored image of the floor.

7. The robot cleaner of claim 5,
wherein the tube is provided with an assembly protrusion (147a), and
wherein the support member is provided with an assembly groove (145a) at a position corresponding to a position of the assembly protrusion.

8. The robot cleaner of claim 5, further comprising:
a third optical sensor (195) provided on a bottom surface of the main body, and configured to emit light toward the floor and receive light reflected from the floor,
wherein the at least one processor is further configured to:
control the third optical sensor to emit light toward the floor, and
in response to non-reception of light reflected from the floor by the third optical sensor, turn off the light emitting device of the second optical sensor.

9. The robot cleaner of claim 5, wherein the at least one processor is further configured to initialize the second optical sensor in response to non-reception of a response signal from the second optical sensor.

10. A method of controlling a robot cleaner (100) including a main body (101) and a drive wheel (151, 152) installed on the main body (101), the method comprising:
driving the drive wheel (151, 152);
detecting rotation of the drive wheel (151, 152);
acquiring an image of a floor to determine a motion vector of the main body (101);
determining a first moving distance moved by the robot cleaner (100) based on the detected rotation of the drive wheel (151, 152);
in response to detecting an obstacle by a first optical sensor, calculating a second moving distance, by
which the robot cleaner (100) moves toward the obstacle after the detecting of the obstacle, based on the motion vector of the main body (101);
the method **characterized by**
cleaning the floor in a vicinity of the obstacle in response to the second moving distance moved by the main body (101) being greater than or equal to a threshold distance, which is based on a distance to the obstacle identified by the first optical sensor at a time when the obstacle is detected; and
cleaning the floor in the vicinity of the obstacle in response to the second moving distance being less than the threshold distance and a collision with the obstacle being detected.

11. The method of claim 10, wherein the cleaning of the floor in the vicinity of the obstacle includes:
protruding a shutter (186) in a direction toward the floor;
moving the main body in a direction away from the obstacle;
retracting the shutter into the main body;
moving the main body toward the obstacle; and
suctioning dust on the floor.

12. The method of claim 10, wherein the calculating of the second moving distance of the robot cleaner based on the image of the floor includes calculating the second moving distance moved by the robot cleaner based on the acquired image of the floor and a previously stored image of the floor.

## Patentansprüche

1. Reinigungsroboter (100), umfassend:
einen Hauptkörper (101);
ein Antriebsrad (151, 152), das an dem Hauptkörper (101) installiert ist;
einen Antriebsmotor (153, 154), der konfiguriert ist, um das Antriebsrad (151, 152) zu drehen;
einen Fahrsensor (160), der konfiguriert ist, um eine Drehung des Antriebsrads (151, 152) zu erfassen;
einen ersten optischen Sensor (130), der konfiguriert ist, um ein Hindernis zu erfassen, das sich in einer Bewegungsrichtung befindet, in der sich der Hauptkörper (101) bewegt;
ein Reinigungswerkzeug (180), das konfiguriert ist, um einen Boden zu reinigen;
einen zweiten optischen Sensor (140), der konfiguriert ist, um ein Bild des Bodens zu erfassen und
einen Bewegungsvektor des Hauptkörpers (101) auszugeben;
wobei der Reinigungsroboter **gekennzeichnet ist durch**
einen Kollisionssensor (120), der konfiguriert ist, um eine Kollision mit dem Hindernis zu erfassen; und
mindestens einen Prozessor, der elektrisch mit dem Antriebsmotor (153, 154), dem Fahrsensor (160), dem ersten optischen Sensor (130), dem zweiten optischen Sensor (140) und dem Kollisionssensor (120) verbunden ist,
wobei der mindestens eine Prozessor konfiguriert ist, um:
eine erste Bewegungsentfernung zu bestimmen, die von dem Hauptkörper (101) zurückgelegt wurde, basierend auf einer Ausgabe des Fahrsensors (160);
als Reaktion auf das Erfassen des Hindernisses eine zweite Bewegungsentfernung zu bestimmen, um die sich der Hauptkörper (101) in Richtung des Hindernisses bewegt, nachdem das Hindernis erfasst wurde, basierend auf der Ausgabe von dem zweiten optischen Sensor (140); und
das Reinigungswerkzeug (180) zu steuern, um den Boden in einer Nähe des Hindernisses als Reaktion darauf zu reinigen, dass die zweite Bewegungsentfernung größer oder gleich einer Schwellenentfernung ist, die auf einer Entfernung zu dem Hindernis basiert, das durch den ersten optischen Sensor zu einem Zeitpunkt identifiziert wird, in dem das Hindernis erfasst wird; und
das Reinigungswerkzeug (180) zu steuern, um den Boden in der Nähe des Hindernisses als Reaktion darauf zu reinigen, dass die zweite Bewegungsentfernung kleiner als die Schwellenentfernung ist und die Kollision mit dem Hindernis erfasst wird.

2. Reinigungsroboter nach Anspruch 1, wobei das Reinigungswerkzeug beinhaltet:
einen Verschluss (186), der an dem Hauptkörper bereitgestellt ist, wobei der Verschluss konfiguriert ist, um in Richtung des Bodens vorzustehen oder in den Hauptkörper einzufahren; und
eine Trommelbürste (181), die konfiguriert ist, um Staub auf dem Boden zu fegen.

3. Reinigungsroboter nach Anspruch 2, wobei als Reaktion auf die zweite Bewegungsentfernung, die von dem Hauptkörper nach der Erfassung des Hindernisses zurückgelegt wurde und die größer als die Schwellenentfernung ist, der mindestens eine Prozessor ferner konfiguriert ist, um das Reinigungswerkzeug so zu steuern, dass der Verschluss in Richtung des Bodens abgesenkt wird, und den Antriebsmotor so zu steuern, dass sich der Hauptkörper rückwärts bewegt.

4. Reinigungsroboter nach Anspruch 2, ferner umfassend:
als Reaktion auf eine Kollision des Hindernisses, die von dem Kollisionssensor erfasst wird, der mindestens eine Prozessor ferner konfiguriert ist, um das Reinigungswerkzeug so zu steuern, dass der Verschluss in Richtung des Bodens abgesenkt wird, und den Antriebsmotor so zu steuern, dass sich der Hauptkörper rückwärts bewegt.

5. Reinigungsroboter nach Anspruch 1,
wobei der zweite optische Sensor beinhaltet:
ein Rohr (147), das am Hauptkörper bereitgestellt ist,
ein Stützelement (145), das von dem Rohr gestützt wird, und
eine lichtemittierende Vorrichtung (132, 142) und einen Bildsensor (131, 141), die auf dem Stützelement bereitgestellt sind, und
wobei der mindestens eine Prozessor ferner konfiguriert ist, um die Bewegungsrichtung und die zweite Bewegungsentfernung des Hauptkörpers basierend auf einem Bild des Bodens zu bestimmen, das durch den Bildsensor erfasst wird.

6. Reinigungsroboter nach Anspruch 5, wobei der mindestens eine Prozessor ferner konfiguriert ist, um die Bewegungsrichtung und die zweite Bewegungsentfernung des Hauptkörpers basierend auf einer Differenz zwischen dem erfassten Bild des Bodens und einem zuvor gespeicherten Bild des Bodens zu bestimmen.

7. Reinigungsroboter nach Anspruch 5,
wobei das Rohr mit einem Montagevorsprung (147a) versehen ist und
wobei das Stützelement mit einer Montagenut (145a) an einer Position versehen ist, die einer Position des Montagevorsprungs entspricht.

8. Reinigungsroboter nach Anspruch 5, ferner umfassend:
einen dritten optischen Sensor (195), der auf einer unteren Oberfläche des Hauptkörpers bereitgestellt ist und konfiguriert ist, um Licht in Richtung des Bodens zu emittieren und von dem Boden reflektiertes Licht zu empfangen,
wobei der mindestens eine Prozessor ferner konfiguriert ist, um:
den dritten optischen Sensor zu steuern, um Licht in Richtung des Bodens zu emittieren, und
als Reaktion auf den Nichtempfang von Licht, das durch den dritten optischen Sensor von dem Boden reflektiert wird, die lichtemittierende Vorrichtung des zweiten optischen Sensors auszuschalten.

9. Reinigungsroboter nach Anspruch 5, wobei der mindestens eine Prozessor ferner konfiguriert ist, um den zweiten optischen Sensor als Reaktion auf den Nichtempfang eines Antwortsignals von dem zweiten optischen Sensor zu initialisieren.

10. Verfahren zum Steuern eines Reinigungsroboters (100), der einen Hauptkörper (101) und ein an dem Hauptkörper (101) installiertes Antriebsrad (151, 152) enthält, wobei das Verfahren umfasst:
Antreiben des Antriebsrads (151,152);
Erfassen einer Drehung des Antriebsrads (151, 152);
Erfassen eines Bildes eines Bodens, um einen Bewegungsvektor des Hauptkörpers (101) zu bestimmen;
Bestimmen einer ersten Bewegungsentfernung, die von dem Reinigungsroboter (100) zurückgelegt wurde, basierend auf der erfassten Drehung des Antriebsrads (151, 152);
als Reaktion auf das Erfassen eines Hindernisses durch einen ersten optischen Sensor, Berechnen einer zweiten Bewegungsentfernung, um
die sich der Reinigungsroboter (100) in Richtung des Hindernisses bewegt, nachdem das Hindernis erfasst wurde, basierend auf dem Bewegungsvektor des Hauptkörpers (101);
wobei das Verfahren **gekennzeichnet ist durch**
Reinigen des Bodens in einer Nähe des Hindernisses als Reaktion darauf, dass die zweite Bewegungsentfernung, die von dem Hauptkörper (101) zurückgelegt wurde, größer oder gleich einer Schwellenentfernung ist, die auf einer Entfernung zu dem Hindernis basiert, das durch den ersten optischen Sensor zu einem Zeitpunkt identifiziert wird, in dem das Hindernis erfasst wird; und
Reinigen des Bodens in der Nähe des Hindernisses als Reaktion darauf, dass die zweite Bewegungsentfernung kleiner als die Schwellenentfernung ist und eine Kollision mit dem Hindernis erfasst wird.

11. Verfahren nach Anspruch 10, wobei das Reinigen des Bodens in der Nähe des Hindernisses beinhaltet:
Vorstehen eines Verschlusses (186) in einer Richtung zum Boden hin;
Bewegen des Hauptkörpers in einer Richtung weg von dem Hindernis;
Einfahren des Verschlusses in den Hauptkörper;
Bewegen des Hauptkörpers in Richtung des Hindernisses; und
Saugen von Staub auf dem Boden.

12. Verfahren nach Anspruch 10, wobei das Berechnen der zweiten Bewegungsentfernung des Reinigungsroboters basierend auf dem Bild des Bodens das Berechnen der zweiten Bewegungsentfernung beinhaltet, die von dem Reinigungsroboter zurückgelegt wurde, basierend auf dem erfassten Bild des Bodens und einem zuvor gespeicherten Bild des Bodens.

## Revendications

1. Robot nettoyeur (100) comprenant :
un corps principal (101) ;
une roue motrice (151, 152) installée sur le corps principal (101) ;
un moteur d'entraînement (153, 154) conçu pour faire tourner la roue motrice (151, 152) ;
un capteur de déplacement (160) conçu pour détecter la rotation de la roue motrice (151, 152) ;
un premier capteur optique (130) conçu pour détecter un obstacle situé dans une direction de déplacement dans laquelle le corps principal (101) se déplace ;
un outil de nettoyage (180) conçu pour nettoyer un sol ;
un deuxième capteur optique (140) conçu pour acquérir une image du sol et
délivrer en sortie un vecteur de mouvement du corps principal (101) ;
le robot nettoyeur étant **caractérisé par**
un capteur de collision (120) conçu pour détecter une collision avec l'obstacle ; et
au moins un processeur connecté électriquement au moteur d'entraînement (153, 154), au capteur de déplacement (160), au premier capteur optique (130), au deuxième capteur optique (140) et au capteur de collision (120),
ledit au moins un processeur étant conçu pour :
déterminer une première distance de déplacement parcourue par le corps principal (101) sur la base d'une sortie du capteur de déplacement (160) ;
en réponse à la détection de l'obstacle, déterminer une seconde distance de déplacement, selon laquelle le corps principal (101) se déplace vers l'obstacle après la détection de l'obstacle, sur la base de la sortie du deuxième capteur optique (140) ; et
commander à l'outil de nettoyage (180) de nettoyer le sol au voisinage de l'obstacle en réponse à la seconde distance de déplacement qui est supérieure ou égale à une distance seuil, qui est basée sur une distance jusqu'à l'obstacle identifié par le premier capteur optique au moment où l'obstacle est
détectée ; et
commander à l'outil de nettoyage (180) de nettoyer le sol au voisinage de l'obstacle en réponse à la seconde distance de déplacement qui est inférieure à la distance seuil et à la collision avec l'obstacle qui est détectée.

2. Robot nettoyeur selon la revendication 1, ledit outil de nettoyage comprenant :
un volet (186) prévu sur le corps principal, le volet étant conçu pour faire saillie vers le sol ou s'escamoter dans le corps principal ; et
une brosse à tambour (181) conçue pour balayer la poussière sur le sol.

3. Robot nettoyeur selon la revendication 2, en réponse à la seconde distance de déplacement parcourue par le corps principal après la détection de l'obstacle qui est supérieure à la distance seuil, ledit au moins un processeur étant en outre conçu pour commander l'outil de nettoyage de sorte que le volet soit abaissé vers le sol et commander le moteur d'entraînement de sorte que le corps principal se déplace vers l'arrière.

4. Robot nettoyeur selon la revendication 2, comprenant en outre :
en réponse à la détection de la collision de l'obstacle par le capteur de collision, ledit au moins un processeur étant en outre conçu pour commander l'outil de nettoyage de sorte que le volet soit abaissé vers le sol, et pour commander le moteur d'entraînement de sorte que le corps principal se déplace vers l'arrière.

5. Robot nettoyeur selon la revendication 1,
ledit second capteur optique comprenant :
un tube (147) prévu sur le corps principal,
un élément de support (145) supporté par le tube, et
un dispositif d'émission de lumière (132, 142) et un capteur d'image (131, 141) prévus sur l'élément de support, et
ledit au moins un processeur étant en outre conçu pour déterminer la direction de déplacement et la seconde distance de déplacement du corps principal sur la base d'une image du sol acquise par le capteur d'image.

6. Robot nettoyeur selon la revendication 5, ledit au moins un processeur étant en outre conçu pour déterminer la direction de déplacement et la seconde distance de déplacement du corps principal sur la base d'une différence entre l'image acquise du sol et une image précédemment stockée du sol.

7. Robot nettoyeur selon la revendication 5,
ledit tube étant doté d'une saillie d'assemblage (147a), et
ledit élément de support étant doté d'une rainure d'assemblage (145a) au niveau d'une position correspondant à une position de la saillie d'assemblage.

8. Robot nettoyeur selon la revendication 5, comprenant en outre :
un troisième capteur optique (195) prévu sur une surface inférieure du corps principal, et conçu pour émettre de la lumière vers le sol et recevoir de la lumière réfléchie par le sol,
ledit au moins un processeur étant en outre conçu pour :
commander au troisième capteur optique d'émettre de la lumière vers le sol, et
en réponse à la non-réception de la lumière réfléchie par le sol par le troisième capteur optique, l'extinction du dispositif d'émission de lumière du deuxième capteur optique.

9. Robot nettoyeur selon la revendication 5, ledit au moins un processeur étant en outre conçu pour initialiser le second capteur optique en réponse à la non-réception d'un signal de réponse en provenance du deuxième capteur optique.

10. Procédé de commande d'un robot nettoyeur (100) comprenant un corps principal (101) et une roue motrice (151, 152) installée sur le corps principal (101), le procédé comprenant :
l'entraînement de la roue motrice (151, 152) ;
la détection de la rotation de la roue motrice (151, 152) ;
l'acquisition d'une image d'un sol pour déterminer un vecteur de mouvement du corps principal (101) ;
la détermination d'une première distance de déplacement parcourue par le robot nettoyeur (100) sur la base de la rotation détectée de la roue motrice (151, 152) ;
en réponse à la détection d'un obstacle par un premier capteur optique, le calcul d'une seconde distance de déplacement,
selon laquelle le robot nettoyeur (100) se déplace vers l'obstacle après la détection de l'obstacle, sur la base du vecteur de mouvement du corps principal (101) ;
le procédé étant **caractérisé par**
le nettoyage du sol au voisinage de l'obstacle en réponse à la seconde distance de déplacement parcourue par le corps principal (101) qui est supérieure ou égale à une distance seuil, qui est basée sur une distance jusqu'à l'obstacle identifiée par le premier capteur optique au moment où l'obstacle est
détectée ; et
le nettoyage du sol au voisinage de l'obstacle en réponse à la seconde distance de déplacement qui est inférieure à la distance seuil et à une collision avec l'obstacle qui est détectée.

11. Procédé selon la revendication 10, ledit nettoyage du sol au voisinage de l'obstacle comprenant :
la saillie d'un volet (186) dans une direction vers le sol ;
le déplacement du corps principal dans une direction s'éloignant de l'obstacle ;
l'escamotage du volet dans le corps principal ;
le déplacement du corps principal vers l'obstacle ; et
l'aspiration de la poussière sur le sol.

12. Procédé selon la revendication 10, ledit calcul de la seconde distance de déplacement du robot nettoyeur sur la base de l'image du sol comprenant le calcul de la seconde distance de déplacement parcourue par le robot nettoyeur sur la base de l'image acquise du sol et d'une image précédemment stockée du sol.
